(19) Europäisches Patentamt
European Patent Office
Office européen des brevets

(11) **EP 4 397 620 A1**

(12) **EUROPEAN PATENT APPLICATION**

(43) Date of publication:
**10.07.2024 Bulletin 2024/28**

(21) Application number: **23211314.2**

(22) Date of filing: **21.11.2023**

(51) International Patent Classification (IPC):
**C01B 32/20** (2017.01)    **H01M 4/133** (2010.01)
**H01M 4/583** (2010.01)

(52) Cooperative Patent Classification (CPC):
**H01M 4/583; C01B 32/20; H01M 4/133;
H01M 4/366; H01M 4/587; H01M 10/0525**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.12.2022   JP 2022206304**

(71) Applicant: **Toyota Jidosha Kabushiki Kaisha
Toyota-shi, Aichi-ken 471-8571 (JP)**

(72) Inventor: **MATSUHARA, Shinsuke
Toyota-shi, 471-8571 (JP)**

(74) Representative: **D Young & Co LLP
3 Noble Street
London EC2V 7BQ (GB)**

(54) **NEGATIVE ELECTRODE ACTIVE MATERIAL, NON-AQUEOUS ELECTROLYTE SECONDARY BATTERY, AND METHOD OF PRODUCING NEGATIVE ELECTRODE ACTIVE MATERIAL**

(57)    A negative electrode active material (5) comprises graphite, low-crystalline carbon (3), and carbon black (4). The graphite forms a secondary particle (2). The secondary particle (2) includes a plurality of primary particles (1). Inside the secondary particle (2), the low-crystalline carbon (3) is adhered to surfaces of the primary particles (1). The carbon black (4) is surrounded by the primary particles (1).

FIG.1

**Description**

CROSS REFERENCE TO RELATED APPLICATIONS

This nonprovisional application is based on Japanese Patent Application No. 2022-206304 filed on December 23, 2022, with the Japan Patent Office, the entire contents of which are hereby incorporated by reference.

BACKGROUND OF THE DISCLOSURE

Field

The present disclosure relates to a negative electrode active material, a non-aqueous electrolyte secondary battery, and a method of producing a negative electrode active material.

Description of the Background Art

Japanese Patent Laying-Open No. 2020-043069 discloses natural graphite that includes a secondary particle which is an assembly of a plurality of primary particles, amorphous carbon that is present on the surface of the primary particles, and a coating layer that surrounds the secondary particle and that includes amorphous carbon.

SUMMARY OF THE DISCLOSURE

As a negative electrode active material of a non-aqueous electrolyte secondary battery (which may be simply called "a battery" hereinafter), graphite is widely used. While the battery is in use (namely, during repeated charge and discharge), the capacity of the battery degrades gradually. A cause of the capacity degradation is considered to be degradation of graphite. For reducing graphite degradation, a method for covering graphite with amorphous carbon has been suggested. It is expected that amorphous carbon can inhibit direct contact between graphite and electrolyte and thereby reduce graphite degradation.

Typically, graphite forms a secondary particle. The secondary particle is an aggregate of primary particles. The amorphous carbon covers the outer surface of the secondary particle. During charge and discharge, the graphite repeatedly expands and shrinks. Due to the volume change of the secondary particle, an open pore may be formed which communicates inside the secondary particle. For example, due to intergranular fracture between the primary particles, a crack can be formed. When a crack is formed on the surface of the secondary particle, an open pore may be formed. The interior wall of the open pore is not covered with amorphous carbon. When the interior wall (a newly-formed surface) of the open pore comes into contact with electrolyte, capacity degradation can proceed.

Hence, an object of the present disclosure is to reduce capacity degradation.

Hereinafter, the technical configuration and effects of the present disclosure will be described. It should be noted that the action mechanism according to the present specification includes presumption. The action mechanism does not limit the technical scope of the present disclosure.

1. A negative electrode active material comprises graphite, low-crystalline carbon, and carbon black. The graphite forms a secondary particle. The secondary particle includes a plurality of primary particles.

Inside the secondary particle, the low-crystalline carbon is adhered to surfaces of the primary particles. The carbon black is surrounded by the primary particles.

In the negative electrode active material according to "1" above, the carbon black is present inside the secondary particle. With the carbon black being present inside the secondary particle, the compressive elastic modulus of the secondary particle may increase. That is, the secondary particle may become hard. With the secondary particle being hard, the volume change of the secondary particle during charge and discharge may be reduced. With the volume change of the secondary particle being reduced, cracks are expected to be reduced as well.

Further, inside the secondary particle, the low-crystalline carbon is adhered to the surface of the primary particles. Because of this, even when cracks (open pores) are formed, new surfaces tend not to be formed. Due to the synergistic effect of the above-described actions, capacity degradation is expected to be reduced.

2. The negative electrode active material according to "1" above includes a secondary particle. In a cross-sectional image of the secondary particle, the secondary particle consists of a central region and a surface layer region. The surface layer region surrounds the central region. The surface layer region extends $0.25D_{max}$ from a surface of the secondary particle in a depth direction of the secondary particle. The $0.25D_{max}$ refers to 0.25 times a maximum diameter. The maximum diameter refers to a distance between two points located farthest apart from each other on an outline of the secondary particle.

In the central region, the low-crystalline carbon is adhered to the surfaces of the primary particles. The carbon black is surrounded by the primary particles.

The internal structure of the secondary particle may be checked within a cross-sectional image of the secondary particle. The cross-sectional image may be an SEM (Scanning Electron Microscope) image, for example.

Conventionally, a secondary particle is firstly formed and then mixed with carbon black and low-crystalline carbon. Hereinafter, this production method is also called "a conventional method". By the conventional method, it is difficult to place carbon black in the central region of the secondary particle. Also by the conventional method, it is difficult to protect the surface of the primary particles in the central region of the secondary particle, with low-crystalline carbon.

A method of producing a negative electrode active material according to "8" below is capable of placing carbon black and low-crystalline carbon in the central region of the secondary particle. With carbon black being present in the central region of the secondary particle, the secondary particle tends to become hard. With low-crystalline carbon being adhered to the surface of the primary particles in the central region, it is expected that capacity degradation tends not to proceed even when cracks are formed.

3. In the negative electrode active material according to "2" above, a closed pore may be formed in at least one of the central region and the surface layer region. The carbon black may be present in the closed pore.

The "closed pore" refers to a gap inside the secondary particle that does not communicate with the outside of the secondary particle. A gap communicating with the outside is an "open pore". The presence or absence of communication between the gap and the outside can be checked within a cross-sectional image of the secondary particle. A closed pore is isolated inside the secondary particle. By the conventional method, it is difficult to place carbon black in a closed pore.

4. In the negative electrode active material according to "1" above, a closed pore may be formed inside the secondary particle. The carbon black may be present in the closed pore.

5. The negative electrode active material according to any one of " 1" to "4" above may comprise the carbon black in a mass fraction from 0.1 to 5%, for example.

6. The negative electrode active material according to any one of " 1" to "5" above may comprise the low-crystalline carbon in a mass fraction from 1 to 5%, for example.

7. A non-aqueous electrolyte secondary battery comprises the negative electrode active material according to any one of "1" to "6" above.

8. A method of producing a negative electrode active material comprises the following (a) and (b):

(a) forming a secondary particle by mixing primary particles, a precursor, and carbon black, the primary particles including graphite; and

(b) performing heat treatment on the secondary particle to change the precursor into low-crystalline carbon.

At the time of formation of the secondary particle (at the time when the primary particles become aggregated), the precursor of low-crystalline carbon and carbon black are mixed thereto, and, as a result, low-crystalline carbon and carbon black may become placed inside the secondary particle.

9. In the method of producing a negative electrode active material according to "8" above, the "a" may include spheroidizing the secondary particle.

With the secondary particle thus spheroidized, it is expected that low-crystalline carbon and carbon black are likely to become enclosed inside the secondary particle.

10. In the method of producing a negative electrode active material according to "8" or "9" above, the primary particles may be in flake form, for example.

With the primary particles being in flake form, it is expected that low-crystalline carbon and carbon black are likely to become enclosed inside the secondary particle.

11. In the method of producing a negative electrode active material according to any one of "8" to "10" above, the precursor may include coal tar pitch, for example.

12. In the method of producing a negative electrode active material according to any one of "8" to "11" above, the precursor may have a softening point of 180°C or less, for example.

With the softening point of the precursor being 180°C or less, the precursor is expected to exhibit good wettability at the time of heat treatment. When the precursor wets and spreads on the surface of the primary particles at the time of heat treatment, the area where low-crystalline carbon is adhered to is expected to be increased.

Next, an embodiment of the present disclosure (which may also be simply called "the present embodiment" hereinafter) and an example of the present disclosure (which may also be simply called "the present example" hereinafter) will be described. It should be noted that neither the present embodiment nor the present example limits the technical scope of the present disclosure. The present embodiment and the present example are illustrative in any respect. The present embodiment and the present example are non-restrictive. The technical scope of the present disclosure encompasses any modifications within the meaning and the scope equivalent to the terms of the claims. For example, it is originally planned that certain configurations of the present embodiment and the present example can be optionally combined.

The foregoing and other objects, features, aspects and advantages of the present disclosure will become more apparent from the following detailed description of the present disclosure when taken in conjunction with the accompanying drawings.

BRIEF DESCRIPTION OF THE DRAWINGS

Fig. 1 is a conceptual view illustrating a negative electrode active material according to the present embodiment.
Fig. 2 is a conceptual view illustrating a central region and a surface layer region of a secondary particle.
Fig. 3 is a schematic flowchart illustrating a method of producing a negative electrode active material according to the present embodiment.
Fig. 4 is a conceptual view illustrating a non-aqueous electrolyte secondary battery according to the present embodiment.
Fig. 5 is a table showing a first battery configuration.
Fig. 6 is a table showing a second battery configuration.
Fig. 7 is a table showing a third battery configuration.
Fig. 8 is a table showing sample configuration and evaluation results.

DESCRIPTION OF THE PREFERRED EMBODIMENTS

1. Terms and Definitions, etc.

Expressions such as "comprise", "include", and "have", and other similar expressions (such as "be composed of", for example) are open-ended expressions. In an open-ended expression, in addition to an essential component, an additional component may or may not be further included. The expression "consist of" is a closed-end expression. However, even when a closed-end expression is used, impurities present under ordinary circumstances as well as an additional element irrelevant to the technique according to the present disclosure are not excluded. The expression "consist essentially of" is a semiclosed-end expression. A semiclosed-end expression tolerates addition of an element that does not substantially affect the fundamental, novel features of the technique according to the present disclosure.

Expressions such as "may" and "can" are not intended to mean "must" (obligation) but rather mean "there is a possibility" (tolerance).

Regarding a plurality of steps, operations, processes, and the like that are included in various methods, the order for implementing those things is not limited to the described order, unless otherwise specified. For example, a plurality of steps may proceed simultaneously. For example, a plurality of steps may be implemented in reverse order.

"At least one of A and B" includes "A or B" and "A and B". "At least one of A and B" may also be expressed as "A and/or B".

A singular form also includes its plural meaning, unless otherwise specified. For example, "a particle" may mean not only "one particle" but also "a plurality of particles (a particle group)" and "a group of particles (powder)".

Any geometric term (such as "parallel", "vertical", and "orthogonal", for example) should not be interpreted solely in its exact meaning. For example, "parallel" may mean a geometric state that is deviated, to some extent, from exact "parallel". Any geometric term herein may include tolerances and/or errors in terms of design, operation, production, and/or the like. The dimensional relationship in each figure may not necessarily coincide with the actual dimensional relationship. The dimensional relationship (in length, width, thickness, and the like) in each figure may have been changed for the purpose of assisting understanding for the readers. Further, a part of a given configuration may have been omitted.

A numerical range such as "from m to n%" includes both the upper limit and the lower limit, unless otherwise specified. That is, "from m to n%" means a numerical range of "not less than m% and not more than n%". Moreover, "not less than m% and not more than n%" includes "more than m% and less than n%". Further, any numerical value selected from a certain numerical range may be used as a new upper limit or a new lower limit. For example, any numerical value from a certain numerical range may be combined with any numerical value described in another location of the present specification or in a table or a drawing to set a new numerical range.

All the numerical values are regarded as being modified by the term "about". The term "about" may mean $\pm 5\%$, $\pm 3\%$, $\pm 1\%$, and/or the like, for example. Each numerical value may be an approximate value that can vary depending on the implementation configuration of the technique according to the present disclosure. Each numerical value may be expressed in significant figures. Unless otherwise specified, each measured value may be the average value obtained from multiple measurements performed. The number of measurements may be 3 or more, or may be 5 or more, or may be 10 or more. Generally, the greater the number of measurements is, the more reliable the average value is expected to be. Each measured value may be rounded off based on the number of the significant figures. Each measured value may include an error occurring due to an identification limit of the measurement apparatus, for example.

A stoichiometric composition formula represents a typical example of a compound. A compound may have a non-stoichiometric composition. For example, "$Al_2O_3$" is not limited to a compound where the ratio of the amount of substance (molar ratio) is "Al/O=2/3". "$Al_2O_3$" represents a compound that includes Al and O in any composition ratio, unless otherwise specified. Further, the compound may be doped with a trace element, or some of Al and/or O may be replaced by another element, for example.

"Derivative" refers to a compound that is derived from its original compound by at least one partial modification selected from the group consisting of substituent introduction, atom replacement, oxidation, reduction, and other chemical reactions. The position of modification may be one position, or may be a plurality of positions. "Substituent" may include, for example, at least one selected from the group consisting of alkyl group, alkenyl group, alkynyl group, cycloalkyl group, unsaturated cycloalkyl group, aromatic group, heterocyclic group, halogen atom (F, Cl, Br, I, etc.), OH group, SH group, CN group, SCN group, OCN group, nitro group, alkoxy group, unsaturated alkoxy group, amino group, alkylamino group, dialkylamino group, aryloxy group, acyl group, alkoxycarbonyl group, acyloxy group, aryloxycarbonyl group, acylamino group, alkoxycarbonylamino group, aryloxy carbonylamino group, sulfonylamino group, sulfamoyl group, carbamoyl group, alkylthio group, arylthio group, sulfonyl group, sulfinyl group, ureido group, phosphoramide group, sulfo group, carboxy group, hydroxamic acid group, sulfino group, hydrazino group, imino group, silyl group, and the like. These substituents may be further substituted. When there are two or more substituents, these substituents may be the same as one another or may be different from each other. A plurality of substituents may be bonded together to form a ring.

"Copolymer" includes at least one selected from the group consisting of unspecified-type, statistical-type, random-type, alternating-type, periodic-type, block-type, and graft-type.

Crystallinity of a carbon material may be evaluated with "an R value". The R value is determined by the following equation (F-1).

$$R = I_{1360}/I_{1580} \ ... \ (F\text{-}1)$$

In the above equation, $I_{1360}$ represents the intensity of a peak at or near 1360 cm$^{-1}$ (the D band) in the Raman spectrum of the carbon material. $I_{1580}$ represents the intensity of a peak at or near 1580 cm$^{-1}$ (the G band) in the Raman spectrum of the carbon material.

The smaller the R value is, the higher the crystallinity is considered to be.

"Graphite" may have an R value of less than 0.20, or may have an R value from 0 to 0.15, for example. "Low-crystalline carbon" may have an R value from 0.20 to 1.00, or may have an R value from 0.40 to 0.80, for example. "Carbon black" may have an R value more than 1.00, or may have an R value from 1.10 to 1.50, for example.

Crystallinity of a carbon material may be evaluated with "a $d_{002}$ value". The $d_{002}$ value represents the average distance between (002) planes. The $d_{002}$ value may be measured in accordance with "JIS R7651: Measurement of lattice parameters and crystallite sizes of carbon materials".

"Graphite" may have a $d_{002}$ value from 0.3354 to 0.3385 nm, for example. "Low-crystalline carbon" may have a $d_{002}$ value from 0.3386 to 0.3450 nm, for example. "Carbon black" may have a $d_{002}$ value from 0.3451 to 0.3550 nm, for example.

"Softening point" of a precursor may be measured by the Mettler softening point method (ASTM D3104).

Other terms may be defined as appropriate in the below description.

2. Negative Electrode Active Material

A negative electrode active material gives rise to a negative electrode reaction. The negative electrode active material may be powder. The negative electrode active material may have a D50 from 1 to 50 μm, or from 5 to 30 μm, or from 10 to 25 μm, for example. "D50" refers to a particle size in volume-based particle size distribution at which the cumulative frequency accumulated from the small particle size side reaches 50%. D50 may be measured by laser diffraction. The sample to be measured is powder. The negative electrode active material may have a BET specific surface area from 0.5 to 5 m$^2$/g, or from 1 to 4 m$^2$/g, or from 1.5 to 3 m$^2$/g, for example. "BET specific surface area" may be measured by a gas adsorption method (a BET one point method).

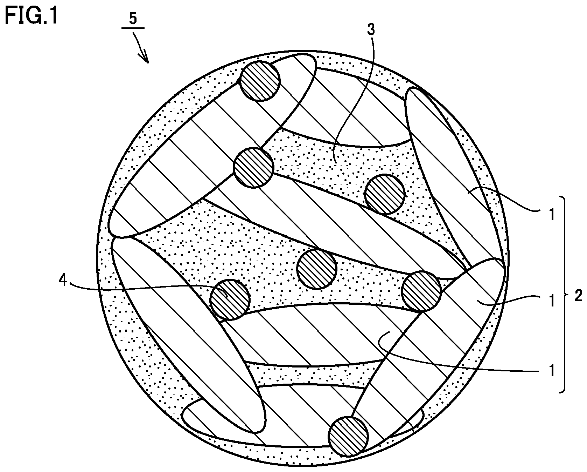

Fig. 1 is a conceptual view illustrating a negative electrode active material according to the present embodiment. A negative electrode active material 5 includes graphite, low-crystalline carbon 3, and carbon black 4. The graphite forms a secondary particle 2. Secondary particle 2 includes a plurality of primary particles 1. Inside secondary particle

**EP 4 397 620 A1**

2, low-crystalline carbon 3 is adhered to the surface of primary particles 1. Inside secondary particle 2, carbon black 4 is surrounded by primary particles 1. The distribution of the carbon materials inside secondary particle 2 may be identified by a TEM (Transmission Electron Microscope) electron diffraction mapping method and/or the like, for example.

With carbon black 4 being present inside secondary particle 2, the volume change of secondary particle 2 is expected to be reduced. It may be because of an increase in the compressive elastic modulus of secondary particle 2. With the volume change of secondary particle 2 being reduced, cracks may be reduced. Further, because low-crystalline carbon 3 is adhered to primary particles 1 inside secondary particle 2, it is conceivable that new surfaces tend not to be formed even when cracks are formed.

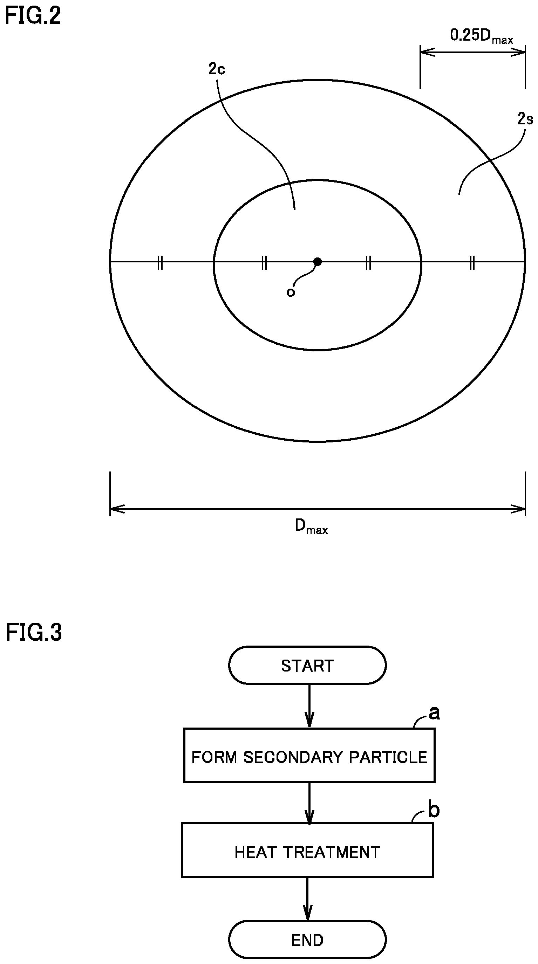

Fig. 2 is a conceptual view illustrating a central region and a surface layer region of a secondary particle. Within a cross-sectional image (a cross-sectional SEM image, for example) of secondary particle 2, secondary particle 2 consists of a central region 2c and a surface layer region 2s. Central region 2c and surface layer region 2s are defined as below. The maximum diameter ($D_{max}$) of secondary particle 2 is identified. $D_{max}$ is a distance between two points located farthest apart from each other on the outline of secondary particle 2. The central point of the line that defines $D_{max}$ is regarded as the center (o) of secondary particle 2. The direction that runs from the surface of secondary particle 2 to the center (o) is the depth direction of secondary particle 2. The region that extends $0.25D_{max}$ from the surface of secondary particle 2 in the depth direction is surface layer region 2s. $0.25D_{max}$ refers to 0.25 times the $D_{max}$. Central region 2c is the area except surface layer region 2s.

In central region 2c, low-crystalline carbon 3 may be adhered to the surface of primary particles 1. In central region 2c, carbon black 4 may be surrounded by primary particles 1. With low-crystalline carbon 3 and carbon black 4 being present in central region 2c, capacity degradation is expected to be reduced.

"Pore" refers to a gap between primary particles 1. A pore may be hollow. A pore may be filled with low-crystalline carbon 3 and carbon black 4, for example. Negative electrode active material 5 may have a porosity from 1 to 15%, or from 5 to 15%, or from 10 to 13%, for example. "Porosity" may be measured by mercury porosimetry.

For example, in at least one of central region 2c and surface layer region 2s, a closed pore may be formed. For example, the closed pore may be formed so as to belong to both the central region 2c and the surface layer region 2s. In the closed pore, carbon black 4 may be present. The closed pore may be filled with low-crystalline carbon 3. The closed pore may be filled with carbon black 4 and low-crystalline carbon 3. A closed pore in surface layer region 2s may be filled with carbon black 4 and low-crystalline carbon 3. A closed pore in central region 2c may be filled with carbon black 4 and low-crystalline carbon 3. Some closed pores may be in central region 2c, or all closed pores may be in central region 2c.

2-1. Graphite

The graphite is crystalline carbon. The graphite is capable of storing Li, in and out, within the gaps between carbon hexagonal net planes. The graphite may include, for example, at least one selected from the group consisting of natural graphite and artificial graphite. Natural graphite may include, for example, at least one selected from the group consisting of flake-form graphite, vein graphite, and earthy graphite.

2-2. Carbon Black

Carbon black 4 is amorphous carbon. Carbon black 4 is surrounded by primary particles 1. For instance, carbon black 4 may be present at the grain boundary between two primary particles 1. Carbon black 4 may be present in a closed pore surrounded by three or more primary particles 1, or in an open pore surrounded by three or more primary particles 1. Carbon black 4 may be adhered to the surface of primary particles 1. Carbon black 4 may form an aggregate, or may form an agglomerate. The size of carbon black 4 may be smaller than that of primary particles 1. The maximum Feret diameter of carbon black 4 may be from 0.01 to 1 $\mu$m, or from 0.1 to 1 $\mu$m, for example.

Carbon black 4 may be formed by any method. Carbon black 4 may include, for example, at least one selected from the group consisting of acetylene black, lamp black, thermal black, furnace black, and channel black.

Negative electrode active material 5 may include carbon black 4 in a mass fraction from 0.1 to 5%, for example. The mass fraction of carbon black 4 may be 0.5% or more, or 1% or more, or 2% or more, for example. The mass fraction of carbon black 4 may be 4% or less, or 3% or less, or 2% or less, for example. With the mass fraction of carbon black 4 being from 2 to 5%, capacity degradation tends to be small.

2-3. Low-Crystalline Carbon

Low-crystalline carbon 3 exhibits crystallinity that is between that of graphite and that of amorphous carbon (carbon black 4). Low-crystalline carbon 3 is adhered to the surface of primary particles 1. Low-crystalline carbon 3 may be in film form. Low-crystalline carbon 3 may cover the surface of primary particles 1. Low-crystalline carbon 3 may

6

cover a part of primary particle 1, or may cover the entire primary particle 1. Low-crystalline carbon 3 may also cover the outer surface of secondary particle 2. Low-crystalline carbon 3 may cover a part of the outer surface, or may cover the entire outer surface. Low-crystalline carbon 3 may be derived from at least one selected from the group consisting of coal tar pitch, mesophase pitch, and petroleum pitch, for example.

2-4. Other Components

Negative electrode active material 5 may include a dopant. The dopant may include, for example, at least one selected from the group consisting of B, N, P, Li, and Ca. The amount thereof to be added in molar fraction may be from 0.01 to 5%, or from 0.1 to 3%, or from 0.1 to 1%, for example.

To the outer surface of secondary particle 2, another type of material may be adhered. The outer surface of secondary particle 2 may be covered with another type of material. This another type of material may include, for example, at least one selected from the group consisting of P, W, Al, and O. The another type of material may include, for example, at least one selected from the group consisting of $Al(OH)_3$, AlOOH, $Al_2O_3$, $WO_3$, $Li_2CO_3$, $LiHCO_3$, and $Li_3PO_4$.

3. Method of Producing Negative Electrode Active Material

Fig. 3 is a schematic flowchart illustrating a method of producing a negative electrode active material according to the present embodiment. Hereinafter, "the method of producing a negative electrode active material according to the present embodiment" may be simply called "the present production method". The present production method includes "(a) forming a secondary particle" and "(b) heat treatment".

3-1. (a) Forming Secondary Particle

The present production method includes forming a secondary particle by mixing primary particles, a precursor, and carbon black.

In the present production method, any mixing apparatus, any particle composing apparatus, and/or the like may be used. For instance, at the same time as the formation of the secondary particle, spheroidization of the secondary particle may be carried out. For instance, spheroidization of the secondary particle may be carried out by impact treatment in high speed air-flow, and/or the like. During the spheroidization of the secondary particle, low-crystalline carbon and carbon black are expected to become enclosed inside the secondary particle. For instance, formation of the secondary particle and spheroidization of the secondary particle may proceed substantially at the same time. For instance, spheroidization treatment may be carried out after formation of the secondary particle.

The primary particles include graphite. The primary particles may include flake-form graphite, for example. With the primary particles being in flake form, during formation of the secondary particle, carbon black is expected to be readily covered with the primary particles. When carbon black is covered with the primary particles, carbon black may be placed inside a closed pore. The primary particles may have any particle size, for example. The primary particles may have a D50 from 1 to 50 $\mu$m, or may have a D50 from 5 to 25 $\mu$m, or may have a D50 from 10 to 20 $\mu$m, for example.

The precursor is heated, and thereby crystallization may proceed and low-crystalline carbon may be formed. The precursor may adhere to the surface of the primary particles. The precursor may cover the surface of the primary particles. The precursor may include, for example, at least one selected from the group consisting of coal tar pitch, mesophase pitch, and petroleum pitch. The precursor may have a softening point of 250°C or less, or 180°C or less, or 120°C or less, for example. With the softening point being 180°C or less, the precursor tends to exhibit good wettability at the time of heat treatment. The softening point may be 50°C or more, or 100°C or more, for example.

The carbon black has catalytic action. By the catalytic action of the carbon black, crystallization of the precursor may be facilitated. The carbon black may have an oil absorption number from 20 to 200 ml/100g, for example. The oil absorption number is an index of the size of the structure. The "oil absorption number" may be measured in accordance with "JIS K6217-4: Carbon black for rubber industry-Fundamental characteristics- Part 4: Determination of oil absorption number". As the oil, dibutyl phthalate (DBP) is used. The carbon black may have an oil absorption number from 50 to 150 ml/100g, or from 50 to 100 ml/100g, for example.

3-2. (b) Heat Treatment

The present production method includes performing heat treatment on the secondary particle to change the precursor into low-crystalline carbon. With the production of low-crystalline carbon, a negative electrode active material may be completed.

The heat treatment may be carried out in an inert atmosphere, for example. The heat treatment may be carried out in an argon atmosphere, for example. The treatment temperature may be from 500 to 1500°C, or from 800 to 1200°C, or from 900 to 1 100°C, for example. The treatment duration may be from 0.5 to 5 hours, or from 0.5 to 3 hours, or from 0.5 to 1 hour, for example.

### 4. Non-Aqueous Electrolyte Secondary Battery

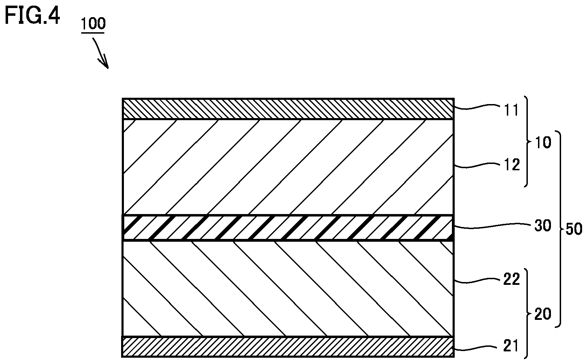

Fig. 4 is a conceptual view illustrating a non-aqueous electrolyte secondary battery according to the present embodiment. A battery 100 includes a power generation element 50 and an electrolyte (not illustrated).

### 4-1. Exterior Package

Battery 100 may include an exterior package (not illustrated). The exterior package may accommodate power generation element 50 and the electrolyte. The exterior package may have any configuration. The exterior package may be a case made of metal, or may be a pouch made of a metal foil laminated film, for example. The case may have any shape. The case may be cylindrical, prismatic, flat, coin-shaped, and/or the like, for example. The exterior package may include Al and/or the like, for example. The exterior package may accommodate a single power generation element 50, or may accommodate a plurality of power generation elements 50, for example. The plurality of power generation elements 50 may form a series circuit, or may form a parallel circuit, for example. Inside the exterior package, the plurality of power generation elements 50 may be stacked in the thickness direction of battery 100.

### 4-2. Power Generation Element

Power generation element 50 may also be called "an electrode group", "an electrode assembly", and the like. Power generation element 50 includes a positive electrode 10 and a negative electrode 20. Power generation element 50 may further include a separator 30. Separator 30 is interposed between positive electrode 10 and negative electrode 20. Power generation element 50 may have any configuration. For example, power generation element 50 may be a stack-type one. For example, positive electrode 10 and negative electrode 20 may be alternately stacked with separator 30 interposed between positive electrode 10 and negative electrode 20 to form power generation element 50. For example, power generation element 50 may be a wound-type one. For example, positive electrode 10 having a belt-like shape, separator 30 having a belt-like shape, and negative electrode 20 having a belt-like shape may be stacked to form a stack. The resulting stack may be wound spirally to form power generation element 50. After being wound, the wound power generation element 50 may be shaped into a flat form.

### 4-3. Negative Electrode

Negative electrode 20 may be in sheet form, for example. Negative electrode 20 may include a negative electrode current collector 21 and a negative electrode active material layer 22, for example. Negative electrode current collector 21 is electrically conductive. Negative electrode current collector 21 supports negative electrode active material layer 22. Negative electrode current collector 21 may be in sheet form, for example. Negative electrode current collector 21 may have a thickness from 5 to 50 $\mu$m, for example. Negative electrode current collector 21 may include a metal foil and/or the like, for example. Negative electrode current collector 21 may include, for example, at least one selected from the group consisting of Cu, Ni, Fe, Zn, Pb, Ag, and Au. Negative electrode current collector 21 may include a Cu foil, a Cu alloy foil, and/or the like, for example.
Negative electrode active material layer 22 is placed on the surface of negative electrode current collector 21. Negative electrode active material layer 22 may be placed on only one side of negative electrode current collector 21. Negative electrode active material layer 22 may be placed on both sides of negative electrode current collector 21. Negative electrode active material layer 22 may have a thickness from 10 to 1000 $\mu$m, or from 50 to 500 $\mu$m, or from 100 to 300 $\mu$m, for example. Negative electrode active material layer 22 includes a negative electrode active material. Negative electrode active material layer 22 may further include a conductive material, a binder, and the like, for example.

### 4-3-1. Conductive Material

The conductive material may form an electron conduction path inside negative electrode active material layer 22. The amount of the conductive material to be used may be, for example, from 0.1 to 10 parts by mass relative to 100 parts by mass of the negative electrode active material. The conductive material may include any component. The conductive material may include, for example, at least one selected from the group consisting of acetylene black (AB), Ketjenblack (registered trademark), vapor grown carbon fibers (VGCFs), carbon nanotubes (CNTs), and graphene flakes (GFs). The CNTs may include at least one selected from the group consisting of single-walled CNTs (SWCNTs) and multi-walled CNTs (MWCNTs).

4-3-2. Binder

The binder is capable of fixing negative electrode active material layer 22 to negative electrode current collector 21. The amount of the binder to be used may be, for example, from 0.1 to 10 parts by mass relative to 100 parts by mass of the negative electrode active material. The binder may include any component. The binder may include, for example, at least one selected from the group consisting of styrenebutadiene rubber (SBR), acrylate butadiene rubber (ABR), sodium alginate, carboxymethylcellulose (such as CMC-H, CMC-Na, CMC-Li, CMC-NH$_4$), polyacrylic acid (such as PAA-H, PAA-Na, PAA-Li), polyacrylonitrile (PAN), polyvinylidene difluoride (PVdF), polytetrafluoroethylene (PTFE), acrylic resin (acrylic acid ester copolymer), methacrylic resin (methacrylic acid ester copolymer), polyvinylpyrrolidone (PVP), polyvinyl alcohol (PVA), and derivatives of these. For example, the expression "CMC-Na" refers to a Na salt of CMC. For example, the expression "CMC-H" refers to an acid-type CMC. The same applies to "PAA-Na" and the like.

4-3-3. Other Components

Negative electrode active material layer 22 may further include an inorganic filler, an organic filler, a solid electrolyte, a surface modifier, a dispersant, a lubricant, a flame retardant, a protective agent, a flux, a coupling agent, an adsorbent, and/or the like, for example. Negative electrode active material layer 22 may include a layered silicate (such as smectite, montmorillonite, bentonite, hectorite), an inorganic filler (such as solid alumina, hollow silica, boehmite), a polysiloxane compound, and/or the like, for example.

4-3-4. Second Negative Electrode Active Material

Negative electrode active material layer 22 includes the negative electrode active material according to the present embodiment. Hereinafter, for the sake of convenience, the negative electrode active material according to the present embodiment is referred to as "a first negative electrode active material". In addition to the first negative electrode active material, negative electrode active material layer 22 may further include a second negative electrode active material. The mixing ratio (mass ratio) of the first negative electrode active material and the second negative electrode active material may be "(first negative electrode active material)/(second negative electrode active material)=1/9 to 9/1", or "(first negative electrode active material)/(second negative electrode active material)=2/8 to 8/2", or "(first negative electrode active material)/(second negative electrode active material)=3/7 to 7/3", for example.

4-3-4-1. Carbon-Based Active Material

The second negative electrode active material may include a carbon-based active material. The second negative electrode active material may include, for example, at least one selected from the group consisting of soft carbon and hard carbon.

4-3-4-2. Alloy-Based Active Material

The second negative electrode active material may include an alloy-based active material. The second negative electrode active material may include, for example, at least one selected from the group consisting of Si, Li silicate, SiO, Si-based alloy, Sn, SnO, and Sn-based alloy.

SiO may be represented by the following formula (A-1), for example.

$$SiO_x \ ... \qquad (A-1)$$

In the above formula, the relationship of $0<x<2$ is satisfied.

In the above formula (A-1), x may satisfy $0.5 \leq x \leq 1.5$ or $0.8 \leq x \leq 1.2$, for example.

Li silicate may include, for example, at least one selected from the group consisting of $Li_4SiO_4$, $Li_2SiO_3$, $Li_2Si_2O_5$, and LisSiOe. The second negative electrode active material may include a mixture of Si and Li silicate, for example. The mixing ratio (mass ratio) may be "Si/(Li silicate)=1/9 to 9/1", or "Si/(Li silicate)=2/8 to 8/2", "Si/(Li silicate)=3/7 to 7/3", or "Si/(Li silicate)=4/6 to 6/4", for example.

The alloy-based active material (such as Si, SiO) may include an additive. The additive may be a substituted solid solution atom or an intruding solid solution atom, for example. The additive may be an adherent adhered to the surface of the alloy-based active material. The adherent may be an elementary substance, an oxide, a carbide, a nitride, a halide, and/or the like, for example. The amount to be added may be, in molar fraction, from 0.01 to 5%, or from 0.1 to 3%, or from 0.1 to 1%, for example. The additive may include, for example, at least one selected from the group consisting of Li, Na, K, Rb, Be, Mg, Ca, Sr, Fe, Ba, B, Al, Ga, In, C, Ge, Sn, Pb, N, P, As, Y, Sb, and S. That is, SiO may be doped with Mg and/or Na. For example, Mg silicate and/or Na silicate may be formed. For example, boron oxide (such as $B_2O_3$, for example), yttrium oxide (such as $Y_2O_3$, for example), and/or the like may be added to SiO.

### 4-3-4-3. Si-C Composite Material

The second negative electrode active material may include a composite material of the carbon-based active material (such as graphite) and the alloy-based active material (such as Si), for example. A composite material including Si and carbon may also be called "a Si-C composite material". For example, Si microparticles may be dispersed inside carbon particles. For example, Si microparticles may be dispersed inside graphite particles. For example, Li silicate particles may be covered with a carbon material (such as amorphous carbon).

### 4-3-4-4. Other Active Materials

The second negative electrode active material may include, for example, at least one selected from the group consisting of Li metal, Li-based alloy, and $Li_4Ti_5O_{12}$.

### 4-4. Positive Electrode

Positive electrode 10 may be in sheet form, for example. Positive electrode 10 may include a positive electrode current collector 11 and a positive electrode active material layer 12, for example. Positive electrode current collector 11 is electrically conductive. Positive electrode current collector 11 supports positive electrode active material layer 12. Positive electrode current collector 11 may be in sheet form, for example. Positive electrode current collector 11 may have a thickness from 5 to 50 $\mu$m, for example. Positive electrode current collector 11 may include a metal foil, for example. Positive electrode current collector 11 may include, for example, at least one selected from the group consisting of Al, Mn, Ti, Fe, and Cr. Positive electrode current collector 11 may include an Al foil, an Al alloy foil, a Ti foil, a stainless steel (SUS) foil, and/or the like, for example.

Between positive electrode current collector 11 and positive electrode active material layer 12, an intermediate layer (not illustrated) may be formed. The intermediate layer does not include a positive electrode active material. The intermediate layer may have a thickness from 0.1 to 5 $\mu$m, for example. The intermediate layer may include a conductive material, an insulation material, a binder, and/or the like, for example. The conductive material may include carbon black and/or the like, for example. The insulation material may include alumina, boehmite, aluminum hydroxide, and/or the like, for example. The binder may include PVdF and/or the like, for example.

Positive electrode active material layer 12 is placed on the surface of positive electrode current collector 11. Positive electrode active material layer 12 may be placed on only one side of positive electrode current collector 11. Positive electrode active material layer 12 may be placed on both sides of positive electrode current collector 11. Positive electrode active material layer 12 may have a thickness from 10 to 1000 $\mu$m, or from 50 to 500 $\mu$m, or from 100 to 300 $\mu$m, for example. Positive electrode active material layer 12 includes a positive electrode active material. Positive electrode active material layer 12 may further include a conductive material, a binder, and the like, for example.

### 4-4-1. Conductive Material

The conductive material may form an electron conduction path inside the positive electrode active material layer 12. The amount of the conductive material to be used may be, for example, from 0.1 to 10 parts by mass relative to 100 parts by mass of the positive electrode active material. The conductive material may include any component. The conductive material may include, for example, at least one selected from the group consisting of graphite, AB, Ketjenblack, VGCFs, CNTs, and GFs.

### 4-4-2. Binder

The binder is capable of fixing positive electrode active material layer 12 to positive electrode current collector 11. The amount of the binder to be used may be, for example, from 0.1 to 10 parts by mass relative to 100 parts by mass of the positive electrode active material. The binder may include any component. The binder may include, for example, at least one selected from the group consisting of PVdF, vinylidene difluoride-hexafluoropropylene copolymer (PVdF-HFP), PTFE, CMC, PAA, PVA, PVP, polyoxyethylene alkyl ether, and derivatives of these.

### 4-4-3. Other Components

Positive electrode active material layer 12 may further include an inorganic filler, an organic filler, a solid electrolyte, a surface modifier, a dispersant, a lubricant, a flame retardant, a protective agent, a flux, a coupling agent, an adsorbent, and/or the like, for example. Positive electrode active material layer 12 may include polyoxyethylene allylphenyl ether phosphate, zeolite, a silane coupling agent, $MoS_2$, $WO_3$, and/or the like, for example.

4-4-4. Positive Electrode Active Material

The positive electrode active material may be in particle form, for example. The positive electrode active material may have a D50 from 1 to 30 μm, or from 10 to 20 μm, or from 1 to 10 μm, for example. The positive electrode active material may include any component. The positive electrode active material may include a transition metal oxide, a polyanion compound, and/or the like, for example. In a single particle (positive electrode active material), the composition may be uniform, or may be non-uniform. For example, there may be a gradient in the composition from the surface of the particle toward the center. The composition may change contiguously, or may change non-contiguously (in steps).

4-4-4-1. Transition Metal Oxide (Space Group R-3m)

The transition metal oxide may have any crystal structure. For example, the transition metal oxide may include a crystal structure that belongs to a space group R-3m and/or the like. For example, a compound represented by the general formula "$LiMO_2$" may have a crystal structure that belongs to a space group R-3m. The transition metal oxide may be represented by the following formula (C-1), for example.

$$Li_{1-a}Ni_xM_{1-x}O_2 ... \qquad (C-1)$$

In the above formula, the relationships of $-0.5 \leq a \leq 0.5$, $0 \leq x \leq 1$ are satisfied.
M may include, for example, at least one selected from the group consisting of Co, Mn, and Al.
In the above formula (C-1), x may satisfy the relationship of $0 \leq x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x \leq 1$, for example. a may satisfy the relationship of $-0.4 \leq a \leq 0.4$, $-0.3 \leq a \leq 0.3$, $-0.2 \leq a \leq 0.2$, or $-0.1 \leq a \leq 0.1$, for example.
The transition metal oxide may include, for example, at least one selected from the group consisting of $LiCoO_2$, $LiMnO_2$, $LiNi_{0.9}Co_{0.1}O_2$, $LiNi_{0.9}Mn_{0.1}O_2$, and $LiNiO_2$.

4-4-4-2. NCM

The transition metal oxide may be represented by the following formula (C-2), for example. A compound represented by the following formula (C-2) may also be called "NCM".

$$Li_{1-a}Ni_xCo_yMn_2O_2 ... \qquad (C-2)$$

In the above formula, the relationships of $-0.5 \leq a \leq 0.5$, $0 < x < 1$, $0 < y < 1$, $0 < z < 1$, $x+y+z=1$ are satisfied.
In the above formula (C-2), x may satisfy the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x < 1$, for example.
In the above formula (C-2), y may satisfy the relationship of $0 < y \leq 0.1$, $0.1 \leq y \leq 0.2$, $0.2 \leq y \leq 0.3$, $0.3 \leq y \leq 0.4$, $0.4 \leq y \leq 0.5$, $0.5 \leq y \leq 0.6$, $0.6 \leq y \leq 0.7$, $0.7 \leq y \leq 0.8$, $0.8 \leq y \leq 0.9$, or $0.9 \leq y < 1$, for example.
In the above formula (C-2), z may satisfy the relationship of $0 < z \leq 0.1$, $0.1 \leq z \leq 0.2$, $0.2 \leq z \leq 0.3$, $0.3 \leq z \leq 0.4$, $0.4 \leq z \leq 0.5$, $0.5 \leq z \leq 0.6$, $0.6 \leq z \leq 0.7$, $0.7 \leq z \leq 0.8$, $0.8 \leq z \leq 0.9$, or $0.9 \leq z < 1$, for example.
NCM may include, for example, at least one selected from the group consisting of $LiNi_{1/3}Co_{1/3}Mn_{1/3}O_2$, $LiNi_{0.4}Co_{0.3}Mn_{0.3}O_2$, $LiNi_{0.3}Co_{0.4}Mn_{0.3}O_2$, $LiNi_{0.3}Co_{0.3}Mn_{0.4}O_2$, $LiNi_{0.5}Co_{0.2}Mn_{0.3}O_2$, $LiNi_{0.5}Co_{0.3}Mn_{0.2}O_2$, $LiNi_{0.5}Co_{0.4}Mn_{0.1}O_2$, $LiNi_{0.5}Co_{0.1}Mn_{0.4}O_2$, $LiNi_{0.6}Co_{0.2}Mn_{0.2}O_2$, $LiNi_{0.6}Co_{0.3}Mn_{0.1}O_2$, $LiNi_{0.6}Co_{0.1}Mn_{0.3}O_2$, $LiNi_{0.7}Co_{0.1}Mn_{0.2}O_2$, $LiNi_{0.7}Co_{0.2}Mn_{0.1}O_2$, $LiNi_{0.8}Co_{0.1}Mn_{0.1}O_2$, and $LiNi_{0.9}Co_{0.05}Mn_{0.05}O_2$.

4-4-4-3. NCA

The transition metal oxide may be represented by the following formula (C-3), for example. A compound represented by the following formula (C-3) may also be called "NCA".

$$Li_{1-a}Ni_xCo_yAl_zO_2 ... \qquad (C-3)$$

In the above formula, the relationships of $-0.5 \leq a \leq 0.5$, $0 < x < 1$, $0 < y < 1$, $0 < z < 1$, $x+y+z=1$ are satisfied.
In the above formula (C-3), x may satisfy the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$,

0.5≤x≤0.6, 0.6<x≤0.7, 0.7<x≤0.8, 0.8<x≤0.9, or 0.9≤x<1, for example.

In the above formula (C-3), y may satisfy the relationship of 0<y≤0.1, 0.1≤y≤0.2, 0.2≤y≤0.3, 0.3≤y≤0.4, 0.4≤y≤0.5, 0.5≤y≤0.6, 0.6≤y≤0.7, 0.7≤y≤0.8, 0.8≤y≤0.9, or 0.9≤y<1, for example.

In the above formula (C-3), z may satisfy the relationship of 0<z≤0.1, 0.1≤z≤0.2, 0.2≤z≤0.3, 0.3≤z≤0.4, 0.4≤z≤0.5, 0.5≤z≤0.6, 0.6≤z≤0.7, 0.7≤z≤0.8, 0.8≤z≤0.9, or 0.9≤z<1, for example.

NCA may include, for example, at least one selected from the group consisting of $LiNi_{0.7}Co_{0.1}Al_{0.2}O_2$, $LiNi_{0.7}Co_{0.2}Al_{0.1}O_2$, $LiNi_{0.8}Co_{0.1}Al_{0.1}O_2$, $LiNi_{0.8}Co_{0.17}Al_{0.03}O_2$, $LiNi_{0.8}Co_{0.15}Al_{0.05}O_2$, and $LiNi_{0.9}Co_{0.05}Al_{0.05}O_2$.

4-4-4-4. Multi-Component System

The positive electrode active material may include two or more NCMs and/or the like, for example. The positive electrode active material may include NCM (0.6≤x) and NCM (x<0.6), for example. "NCM (0.6≤x)" refers to a compound in which x (Ni ratio) in the above formula (C-2) is 0.6 or more. NCM (0.6≤x) may also be called "a high-nickel material", for example. NCM (0.6≤x) includes $LiNi_{0.8}Co_{0.1}Mn_{0.1}O_2$ and/or the like, for example. "NCM(x<0.6)" refers to a compound in which x (Ni ratio) in the above formula (C-2) is less than 0.6. NCM (x<0.6) includes $LiNi_{1/3}Co_{1/3}Mn_{1/3}O_2$ and/or the like, for example. The mixing ratio (mass ratio) between NCM (0.6≤x) and NCM (x<0.6) may be "NCM (0.6≤x)/NCM (x<0.6)=9/1 to 1/9", "NCM (0.6≤x)/NCM (x<0.6)=9/1 to 4/6", or "NCM (0.6≤x)/NCM (x<0.6)=9/1 to 3/7", for example.

The positive electrode active material may include NCA and NCM, for example. The mixing ratio (mass ratio) between NCA and NCM may be "NCA/NCM=9/1 to 1/9", "NCA/NCM=9/1 to 4/6", or "NCA/NCM=9/1 to 3/7", for example. Between NCA and NCM, the Ni ratio may be the same or may be different. The Ni ratio of NCA may be more than the Ni ratio of NCM. The Ni ratio of NCA may be less than the Ni ratio of NCM.

4-4-4-5. Transition Metal Oxide (Space Group C2/m)

The transition metal oxide may include a crystal structure that belongs to a space group C2/m and/or the like, for example. The transition metal oxide may be represented by the following formula (C-4), for example.

$$Li_2MO_3 \ldots \qquad (C-4)$$

In the above formula, M may include, for example, at least one selected from the group consisting of Ni, Co, Mn, and Fe.

The positive electrode active material may include a mixture of $LiMO_2$ (space group R-3m) and $Li_2MO_3$ (space group C2/m), for example. The positive electrode active material may include a solid solution that is formed of $LiMO_2$ and $Li_2MO_3$ ($Li_2MO_3$-$LiMO_2$), and/or the like, for example.

<Transition Metal Oxide: Space Group Fd-3m>

The transition metal oxide may include a crystal structure that belongs to a space group Fd-3m, and/or the like, for example. The transition metal oxide may be represented by, for example, the following formula (C-5):

$$LiMn_{2-x}M_xO_4 \ldots \qquad (C-5)$$

where the relationship of 0≤x≤2 is satisfied.

M may include, for example, at least one selected from the group consisting of Ni, Fe, and Zn.

$LiM_2O_4$ (space group Fd-3m) may include, for example, at least one selected from the group consisting of $LiMn_2O_4$ and $LiMn_{1.5}Ni_{0.5}C_4$. The positive electrode active material may include a mixture of $LiMO_2$ (space group R-3m) and $LiM_2O_4$ (space group Fd-3m), for example. The mixing ratio (mass ratio) between $LiMO_2$ (space group R-3m) and $LiM_2O_4$ (space group Fd-3m) may be "$LiMO_2$/$LiM_2O_4$=9/1 to 9/1", or "$LiMO_2$/$LiM_2O_4$=9/1 to 5/5", or "$LiMO_2$/$LiM_2O_4$=9/1 to 7/3", for example.

4-4-4-6. Polyanion Compound

The polyanion compound may include a phosphoric acid salt (such as $LiFePO_4$ for example), a silicic acid salt, a boric acid salt, and/or the like, for example. The polyanion compound may be represented by the following formulae (C-6) to (C-9), for example.

$$LiMPO_4 \ldots \qquad (C-6)$$

$$Li_{2-x}MPO_4F \ldots \quad (C\text{-}7)$$

$$Li_2MSiO_4 \ldots \quad (C\text{-}8)$$

$$LiMBO_3 \ldots \quad (C\text{-}9)$$

In the above formulae (C-6) to (C-9), M may include, for example, at least one selected from the group consisting of Fe, Mn, and Co. In the above formula (C-7), the relationship of $0 \leq x \leq 2$ may be satisfied, for example.

The positive electrode active material may include a mixture of $LiMO_2$ (space group R-3m) and the polyanion compound, for example. The mixing ratio (mass ratio) between $LiMO_2$ (space group R-3m) and the polyanion compound may be "$LiMO_2$/(polyanion compound) =9/1 to 9/1", or "$LiMO_2$/(polyanion compound) =9/1 to 5/5", or "$LiMO_2$/(polyanion compound) =9/1 to 7/3", for example.

4-4-4-7. Dopant

To the positive electrode active material, a dopant may be added. The dopant may be diffused throughout the entire particle, or may be locally distributed. For example, the dopant may be locally distributed on the particle surface. The dopant may be a substituted solid solution atom, or may be an intruding solid solution atom. The amount of the dopant to be added (the molar fraction relative to the total amount of the positive electrode active material) may be from 0.01 to 5%, or may be from 0.1 to 3%, or may be from 0.1 to 1%, for example. A single type of dopant may be added, or two or more types of dopant may be added. The two or more dopants may form a complex.

The dopant may include, for example, at least one selected from the group consisting of B, C, N, a halogen, Si, Na, Mg, Al, Mn, Co, Cr, Sc, Ti, V, Cu, Zn, Ga, Ge, Se, Sr, Y, Zr, Nb, Mo, In, Pb, Bi, Sb, Sn, W, La, Ce, Pr, Nd, Pm, Sm, Eu, Gd, Tb, Dy, Ho, Er, Tm, Yb, Lu, and an actinoid.

For example, to NCA, a combination of "Zr, Mg, W, Sm", a combination of "Ti, Mn, Nb, Si, Mo", or a combination of "Er, Mg" may be added.

For example, to NCM, Ti may be added. For example, to NCM, a combination of "Zr, W", a combination of "Si, W", or a combination of "Zr, W, Al, Ti, Co" may be added.

4-4-4-8. Surface Covering

Positive electrode 10 may include a composite particle. The composite particle includes a core particle and a covering layer. The core particle includes a positive electrode active material. The covering layer covers at least part of the surface of the core particle. The covering layer may have a thickness from 1 to 3000 nm, or from 5 to 2000 nm, or from 10 to 1000 nm, or from 10 to 100 nm, or from 10 to 50 nm, for example. The thickness of the covering layer may be measured in an SEM image of a cross section of the particle, and/or the like, for example. More specifically, the composite particle is embedded in a resin material to prepare a sample. With the use of an ion milling apparatus, a cross section of the sample is exposed. For example, an ion milling apparatus with the trade name "ArBlade (registered trademark) 5000" manufactured by Hitachi High-Technologies (or a similar product) may be used. The cross section of the sample is examined by an SEM. For example, an SEM apparatus with the trade name "SU8030" manufactured by Hitachi High-Technologies (or a similar product) may be used. For each of ten composite particles, the thickness of the covering layer is measured in twenty fields of view. The arithmetic mean of a total of 200 thickness measurements is used.

The ratio of the part of the surface of the core particle covered by the covering layer is also called "a covering rate". The covering rate may be 1% or more, or 10% or more, or 30% or more, or 50% or more, or 70% or more, for example. The covering rate may be 100% or less, or 90% or less, or 80% or less, for example.

For example, the covering rate may be measured by XPS (X-ray Photoelectron Spectroscopy). For example, an XPS apparatus with the trade name "PHI X-tool" manufactured by ULVAC-PHI (or a similar product) may be used. A sample powder consisting of the composite particle is loaded in the XPS apparatus. Narrow scan analysis is carried out. The measurement data is processed with an analysis software.

For example, an analysis software with the trade name "MulTiPak" manufactured by ULVAC-PHI (or a similar product) may be used. The measurement data is analyzed to detect a plurality of types of elements. From the area of each peak, the ratio of the detected element is determined. By the following equation (F-2), the covering rate is determined.

$$\theta = \{I_1/(I_0+I_1)\} \times 100 \ldots (F\text{-}2)$$

$\theta$: Covering rate [%]
$I_0$: Ratio of element attributable to core particle

$I_1$: Ratio of element attributable to covering layer

For example, when the core particle includes NCM, $I_0$ represents the total ratio of the elements "Ni, Co, Mn". For example, when the core particle includes NCA, $I_0$ represents the total ratio of the elements "Ni, Co, Al". For example, when the covering layer includes P and B, $I_1$ represents the total ratio of the elements "P, B".

The covering layer may include any component. The covering layer may include an elementary substance, organic matter, an inorganic acid salt, an organic acid salt, a hydroxide, an oxide, a carbide, a nitride, a sulfide, a halide, and/or the like, for example. The covering layer may include, for example, at least one selected from the group consisting of B, Al, W, Zr, Ti, Co, F, lithium compound (such as $Li_2CO_3$, $LiHCO_3$, $LiOH$, $Li_2O$, for example), tungsten oxide (such as $WO_3$, for example), titanium oxide (such as $TiO_2$, for example), zirconium oxide (such as $ZrO_2$, for example), boron oxide, boron phosphate (such as $BPO_4$, for example), aluminum oxide (such as $Al_2O_3$, for example), boehmite, aluminum hydroxide, phosphoric acid salt [such as $Li_3PO_4$, $(NH_4)_3PO_4$, $AlPO_4$, for example], boric acid salt (such as $Li_2B_4O_7$, $LiBO_3$, for example), polyacrylic acid salt (such as Li salt, Na salt, $NH_4$ salt), acetic acid salt (such as Li salt, for example), CMC (such as CMC-Na, CMC-Li, CMC-$NH_4$), $LiNbO_3$, $Li_2TiO_3$, and Li-containing halide (such as $LiAlCl_4$, $LiTiAlF_6$, $LiYBr_6$, $LiYCl_6$, for example).

4-4-4-9. Hollow Particles, Solid Particles

"Hollow particle" refers to a secondary particle in which, in a cross-sectional image thereof, the proportion of the area of the central cavity is 30% or more of the entire cross-sectional area of the particle. The proportion of the cavity in a hollow particle may be 40% or more, or 50% or more, or 60% or more, for example. "Solid particle" refers to a secondary particle in which, in a cross-sectional image of the particle, the proportion of the area of the central cavity is less than 30% of the entire cross-sectional area of the particle. The proportion of the cavity in a solid particle may be 20% or less, or 10% or less, or 5% or less, for example. The positive electrode active material may be hollow particles, or may be solid particles. A mixture of hollow particles and solid particles may be used. The mixing ratio (mass ratio) between hollow particles and solid particles may be "(hollow particles)/(solid particles)=1/9 to 9/1", or "(hollow particles)/(solid particles)=2/8 to 8/2", or "(hollow particles)/(solid particles)=3/7 to 7/3", or "(hollow particles)/(solid particles)=4/6 to 6/4", for example.

4-4-4-10. Large Particles, Small Particles

"Electrode active material" collectively refers to a positive electrode active material and a negative electrode active material. The electrode active material may have a unimodal particle size distribution (based on the number), for example. The electrode active material may have a multimodal particle size distribution, for example. The electrode active material may have a bimodal particle size distribution, for example. That is, the electrode active material may include large particles and small particles. When the particle size distribution is bimodal, the particle size corresponding to the peak top of the larger particle size is regarded as the particle size of the large particles ($d_L$). The particle size corresponding to the peak top of the smaller particle size is regarded as the particle size of the small particles (ds). The particle size ratio ($d_L/d_S$) may be from 2 to 10, or from 2 to 5, or from 2 to 4, for example. $d_L$ may be from 8 to 20 $\mu$m, or from 8 to 15 $\mu$m, for example. $d_S$ may be from 1 to 10 $\mu$m, or from 1 to 5 $\mu$m, for example.

For example, with the use of a waveform analysis software, peak separating processing may be carried out for the particle size distribution. The ratio between the peak area of the large particles ($S_L$) and the peak area of the small particles ($S_S$) may be "$S_L/S_S$=1/9 to 9/1", or "$S_L/S_S$=5/5 to 9/1", or "$S_L/S_S$=7/3 to 9/1", for example.

The number-based particle size distribution is measured by a microscope method. From the electrode active material layer, a plurality of cross-sectional samples are taken. The cross-sectional sample may include a cross section vertical to the surface of the electrode active material layer, for example. By ion milling and/or the like, for example, cleaning is carried out to the side that is to be observed. By SEM, the cross-sectional sample is examined. The magnification for the examination is adjusted in such a way that 10 to 100 particles are contained within the examination field of view. The Feret diameters of all the particles in the image are measured. "Feret diameter" refers to the distance between two points located farthest apart from each other on the outline of the particle. The plurality of the cross-sectional samples are examined to obtain a total of 1000 or more Feret diameters. From the 1000 or more Feret diameters, number-based particle size distribution is created.

The bimodal particle size distribution may be formed by two types of particles mixed together. These two types of particles have different particle size distributions. For example, the two types of particles may have different D50. "D50" refers to a particle size in volume-based particle size distribution at which the cumulative frequency accumulated from the side of small particle sizes reaches 50%. D50 may be measured by laser diffraction. The sample to be measured is powder. For example, the large particles may have a D50 from 8 to 20 $\mu$m, or from 8 to 15 $\mu$m. For example, the small particles may have a D50 from 1 to 10 $\mu$m, or from 1 to 5 $\mu$m. The ratio of the D50 of the large particles to the D50 of the small particles may be from 2 to 10, or from 2 to 5, or from 2 to 4, for example. The mixing ratio (mass ratio) between the large particles and the small particles may be "(large particles)/(small particles)=1/9 to 9/1", or "(large particles)/(small particles)=5/5 to 9/1", or "(large particles)/(small particles)=7/3 to 9/1", for example.

The large particles and the small particles may have the same composition, or may have different compositions. For example, the large particles may be NCA and the small particles may be NCM. For example, the large particles may be NCM ($0.6 \leq x$) and the small particles may be NCM ($x<0.6$).

### 4-5. Electrolyte

The electrolyte is a Li-ion conductor. The electrolyte may be a liquid electrolyte, a gelled electrolyte, or a solid electrolyte.

### 4-5-1. Liquid Electrolyte

The liquid electrolyte may include an electrolyte solution, for example. The electrolyte solution includes a solvent and a solute.

### 4-5-1-1. Solute

The concentration of the solute may be from 0.5 to 1 mol/L, or from 1 to 1.5 mol/L, or from 1.5 to 2 mol/L, or from 2 to 2.5 mol/L, or from 2.5 to 3 mol/L, for example. The solute includes a supporting salt (a Li salt). The solute may include an inorganic acid salt, an imide salt, an oxalato complex, a halide, and/or the like, for example. The solute may include, for example, at least one selected from the group consisting of $LiPF_6$, $LiBF_4$, $LiClO_4$, $LiAsF_6$, $LiSbF_6$, $LiN(SO_2F)_2$ "LiFSI", $LiN(SO_2CF_3)_2$ "LiTFSI", $LiB(C_2O_4)_2$ "LiBOB", $LiBF_2(C_2O_4)$ "LiDFOB", $LiPF_2(C_2O_4)_2$ "LiDFOP", $LiPO_2F_2$, $FSO_3Li$, LiI, LiBr, and derivatives of these.

### 4-5-1-2. Carbonate-Based Solvent

The electrolyte solution may include a carbonate-based solvent (a carbonate-ester-based solvent), for example. The solvent may include a cyclic carbonate, a chain carbonate, a fluorinated carbonate, and/or the like, for example. The solvent may include, for example, at least one selected from the group consisting of ethylene carbonate (EC), propylene carbonate (PC), butylene carbonate (BC), dimethyl carbonate (DMC), diethyl carbonate (DEC), ethyl methyl carbonate (EMC), monofluoroethylene carbonate (FEC), difluoroethylene carbonate, 4,4-difluoroethylene carbonate, trifluoroethylene carbonate, perfluoroethylene carbonate, fluoropropylene carbonate, difluoropropylene carbonate, and derivatives of these.

The solvent may include a cyclic carbonate (such as EC, PC, FEC) and a chain carbonate (such as EMC, DMC, DEC). The mixing ratio between the cyclic carbonate and the chain carbonate (volume ratio) may be "(cyclic carbonate)/(chain carbonate)=1/9 to 4/6", or "(cyclic carbonate)/(chain carbonate)=2/8 to 3/7", or "(cyclic carbonate)/(chain carbonate)=3/7 to 4/6", for example.

The solvent may include a cyclic carbonate (such as EC, PC) and a fluorinated cyclic carbonate (such as FEC). The mixing ratio between the cyclic carbonate and the fluorinated cyclic carbonate (volume ratio) may be "(cyclic carbonate)/(fluorinated cyclic carbonate)=99/1 to 90/10", or "(cyclic carbonate)/(fluorinated cyclic carbonate)=9/1 to 1/9", or "(cyclic carbonate)/(fluorinated cyclic carbonate)=9/1 to 7/3", or "(cyclic carbonate)/(fluorinated cyclic carbonate)=3/7 to 1/9", for example.

The solvent may include EC, FEC, EMC, DMC, and DEC, for example. The volume ratio of these components may satisfy the relationship represented by the following equation (E-1), for example.

$$V_{EC}+V_{FEC}+V_{EMC}+V_{DMC}+V_{DEC}=10 \dots (\text{E-1})$$

In the above equation, each of $V_{EC}$, $V_{FEC}$, $V_{EMC}$, $V_{DMC}$, and $V_{DEC}$ represents the volume ratio of EC, FEC, EMC, DMC, and DEC, respectively.

The following relationships are satisfied: $1 \leq V_{EC} \leq 4$, $0 \leq V_{FEC} \leq 3$, $V_{EC}+V_{FEC} \leq 4$, $0 \leq V_{EMC} \leq 9$, $0 \leq V_{DMC} \leq 9$, $0 \leq V_{DEC} \leq 9$, $6 \leq V_{EMC}+V_{DMC}+V_{DEC} \leq 9$.

In the above equation (E-1),

the relationship of $1 \leq V_{EC} \leq 2$ or $2 \leq V_{EC} \leq 3$ may be satisfied, for example;
the relationship of $1 \leq V_{FEC} \leq 2$ or $2 \leq V_{FEC} \leq 4$ may be satisfied, for example;

the relationship of $3 \leq V_{EMC} \leq 4$ or $6 \leq V_{EMC} \leq 8$ may be satisfied, for example;

the relationship of $3 \leq V_{DMC} \leq 4$ or $6 \leq V_{DMC} \leq 8$ may be satisfied, for example; and

the relationship of $3 \leq V_{DEC} \leq 4$ or $6 \leq V_{DEC} \leq 8$ may be satisfied, for example.

The solvent may have a composition of "EC/EMC=3/7", "EC/DMC=3/7", "EC/FEC/DEC=1/2/7", "EC/DMC/EMC=3/4/3", "EC/DMC/EMC=3/3/4", "EC/FEC/DMC/EMC=2/1/4/3", "EC/FEC/DMC/EMC=1/2/4/3", "EC/FEC/DMC/EMC=2/1/3/4", "EC/FEC/DMC/EMC=1/2/3/4" (volume ratio), and/or the like, for example.

4-5-1-3. Ether-Based Solvent

The electrolyte solution may include an ether-based solvent. The electrolyte solution may include, for example, at least one selected from the group consisting of tetrahydrofuran (THF), 1,4-dioxane (DOX), 1,3-dioxolane (DOL), 1,2-dimethoxyethane (DME), 1,2-diethoxyethane (DEE), hydrofluoroether (HFE), ethylglyme, triglyme, tetraglyme, and derivatives of these.

4-5-1-4. Additive

The electrolyte solution may include any additive. The amount to be added (the mass fraction to the total amount of the electrolyte solution) may be from 0.01 to 5%, or from 0.05 to 3%, or from 0.1 to 1%, for example. The additive may include an SEI (Solid Electrolyte Interphase) formation promoter, an SEI formation inhibitor, a gas generation agent, an overcharging inhibitor, a flame retardant, an antioxidant, an electrode-protecting agent, a surfactant, and/or the like, for example.

The additive may include, for example, at least one selected from the group consisting of vinylene carbonate (VC), vinylethylene carbonate (VEC), 1,3-propane sultone (PS), tert-amylbenzene, 1,4-di-tert-butylbenzene, biphenyl (BP), cyclohexylbenzene (CHB), ethylene sulfite (ES), propane sultone (PS), ethylene sulfate (DTD), γ-butyrolactone, phosphazene compound, carboxylate ester [such as methyl formate (MF), methyl acetate (MA), methyl propionate (MP), diethyl malonate (DEM), for example], fluorobenzene (such as monofluorobenzene (FB), 1,2-difluorobenzene, 1,3-difluorobenzene, 1,4-difluorobenzene, 1,2,3-trifluorobenzene, 1,2,4-trifluorobenzene, 1,3,5-trifluorobenzene, 1,2,3,4-tetrafluorobenzene, 1,2,3,5-tetrafluorobenzene, 1,2,4,5-tetrafluorobenzene, pentafluorobenzene, hexafluorobenzene, for example), fluorotoluene (such as 2-fluorotoluene, 3-fluorotoluene, 4-fluorotoluene, 2,3-difluorotoluene, 2,4-difluorotoluene, 2,5-difluorotoluene, 2,6-difluorotoluene, 3,4-difluorotoluene, octafluorotoluene, for example), benzotrifluoride (such as benzotrifluoride, 2-fluorobenzotrifluoride, 3-fluorobenzotrifluoride, 4-fluorobenzotrifluoride, 2-methylbenzotrifluoride, 3-methylbenzotrifluoride, 4-methylbenzotrifluoride, for example), fluoroxylene (such as 3-fluoro-o-xylene, 4-fluoro-o-xylene, 2-fluoro-m-xylene, 5-fluoro-m-xylene, for example), sulfur-containing heterocyclic compound (such as benzothiazole, 2-methylbenzothiazole, tetrathiafulvalene, for example), nitrile compound (such as adiponitrile, succinonitrile, for example), phosphate (such as trimethyl phosphate, triethyl phosphate, for example), carboxylic anhydride (such as acetic anhydride, propionic anhydride, oxalic anhydride, succinic anhydride, maleic anhydride, phthalic anhydride, benzoic anhydride, for example), alcohol (such as methanol, ethanol, n-propyl alcohol, ethylene glycol, diethylene glycol monomethyl ether, for example), and derivatives of these.

The components described above as the solute and the solvent may be used as a trace component (an additive). The additive may include, for example, at least one selected from the group consisting of $LiBF_4$, LiFSI, LiTFSI, LiBOB, LiDFOB, LiDFOP, $LiPO_2F_2$, $FSO_3Li$, LiI, LiBr, HFE, DOX, PC, FEC, and derivatives of these.

4-5-1-5. Ionic Liquid

The liquid electrolyte may include an ionic liquid. The liquid electrolyte may include, for example, at least one selected from the group consisting of a sulfonium salt, an ammonium salt, a pyridinium salt, a piperidinium salt, a pyrrolidinium salt, a morpholinium salt, a phosphonium salt, an imidazolium salt, and derivatives of these.

4-5-2. Gelled Electrolyte

The gelled electrolyte may include a liquid electrolyte and a polymer material. The polymer material may form a polymer matrix. The polymer material may include, for example, at least one selected from the group consisting of PVdF, PVdF-HFP, PAN, PVdF-PAN, polyethylene oxide (PEO), polyethylene glycol (PEG), and derivatives of these.

4-5-3. Solid Electrolyte

The solid electrolyte may be in particle form, for example. The solid electrolyte may have a D50 from 0.1 to 3

$\mu$m, for example. The D50 of the solid electrolyte may be 1 $\mu$m or less, or 0.5 $\mu$m or less, for example. The solid electrolyte may include, for example, at least one selected from the group consisting of a sulfide solid electrolyte, an oxide solid electrolyte, a nitride solid electrolyte, a halide solid electrolyte, and a hydride solid electrolyte. The sulfide solid electrolyte may be glass ceramic, or may be argyrodite, for example. The sulfide solid electrolyte may include, for example, at least one selected from the group consisting of LiI-LiBr-$Li_3PS_4$, $Li_2S$-$SiS_2$, LiI-$Li_2S$-$SiS_2$, LiI-$Li_2S$-$P_2S_5$, LiI-$Li_2O$-$Li_2S$-$P_2S_5$, LiI-$Li_2S$-$P_2O_5$, LiI-$Li_3PO_4$-$P_2S_5$, $Li_2S$-$GeS_2$-$P_2S_5$, $Li_2S$-$P_2S_5$, $Li_4P_2S_6$, $Li_7P_3S_{11}$, $Li_3PS_4$, and $Li_6PS_5X$ (X=Cl, Br, I). For example, "LiI-LiBr-$Li_3PS_4$" refers to a substance that is synthesized by mixing LiI, LiBr, and $Li_3PS_4$ in a freely-selected molar ratio (a ratio of the amount of substance).

In the case when battery 100 is an all-solid-state battery, separator 30 (described below) may be replaced by a solid electrolyte layer. The solid electrolyte layer may include a solid electrolyte and a binder, for example. The amount of the binder to be used may be, for example, from 0.1 to 10 parts by mass relative to 100 parts by mass of the solid electrolyte. The binder may include, for example, at least one selected from the group consisting of PVdF, PVdF-HFP, ABR, and SBR. The solid electrolyte layer may have a monolayer structure, or may have a multilayer structure. In the case of a multilayer structure, each layer may include a different solid electrolyte.

4-6. Separator

Separator 30 is capable of separating positive electrode 10 from negative electrode 20. Separator 30 is electrically insulating. Separator 30 may include, for example, at least one selected from the group consisting of a resin film, an inorganic particle layer, and an organic particle layer. Separator 30 may include a resin film and an inorganic particle layer, for example.

4-6-1. Resin Film

The resin film is porous. The resin film may include a microporous film, a nonwoven fabric, and/or the like, for example. The resin film includes a resin skeleton. The resin skeleton may be contiguous in mesh form, for example. Gaps in the resin skeleton form pores. The resin film allows the electrolyte to permeate therethrough. The resin film may have an average pore size of 1 $\mu$m or less, for example. The resin film may have an average pore size from 0.01 to 1 $\mu$m, or from 0.1 to 0.5 $\mu$m, for example. The "average pore size" may be measured by mercury porosimetry. The resin film may have a Gurley value from 50 to 250 s/100cm$^3$, for example. "Gurley value" may be measured by a Gurley test method.

The resin film may include, for example, at least one selected from the group consisting of an olefin-based resin, a polyurethane-based resin, a polyamide-based resin, a cellulose-based resin, a polyether-based resin, an acrylic-based resin, a polyester-based resin, and the like. The resin film may include, for example, at least one selected from the group consisting of polyethylene (PE), polypropylene (PP), polyamide (PA), polyamide-imide (PAI), polyimide (PI), aromatic polyamide (aramid), and polyphenylene ether (PPE), and derivatives of these. The resin film may be formed by stretching, phase separation, and/or the like, for example. The resin film may have a thickness from 5 to 50 $\mu$m, or from 10 to 25 $\mu$m, for example.

The resin film may have a monolayer structure. The resin film may consist of a PE layer, for example. A skeleton of a PE layer is formed of PE. The PE layer may have shut-down function. The resin film may have a multilayer structure, for example. The resin film may include a PP layer and a PE layer, for example. A skeleton of a PP layer is formed of PP. The resin film may have a three-layer structure, for example. The resin film may be formed by stacking a PP layer, a PE layer, and a PP layer in this order, for example. The thickness of the PE layer may be from 5 to 20 $\mu$m, for example. The thickness of the PP layer may be from 3 to 10 $\mu$m, for example.

4-6-2. Inorganic Particle Layer

The inorganic particle layer may be formed on the surface of the resin film. The inorganic particle layer may be formed on only one side of the resin film, or may be formed on both sides of the resin film. The inorganic particle layer may be formed on the side facing positive electrode 10, or may be formed on the side facing negative electrode 20. The inorganic particle layer may be formed on the surface of positive electrode 10, or may be formed on the surface of negative electrode 20.

The inorganic particle layer is porous. The inorganic particle layer includes inorganic particles. The inorganic particles may also be called "an inorganic filler". Gaps between the inorganic particles form pores. The inorganic particle layer may have a thickness from 0.5 to 10 $\mu$m, or from 1 to 5 $\mu$m, for example. The inorganic particles may include a heat-resistant material, for example. The inorganic particle layer that includes a heat-resistant material is also called "HRL (Heat Resistance Layer)". The inorganic particles may include at least one selected from the group consisting of boehmite, alumina, zirconia, titania, magnesia, silica, and the like. The inorganic particles may have any shape. The inorganic particles may be spherical, rod-like, plate-like, fibrous, and/or the like, for example. The inorganic particles may have a D50 from 0.1 to 10 $\mu$m, or from 0.5 to 3 $\mu$m, for example. The inorganic particle layer may further include a binder. The binder may include, for example, at least one selected from the group consisting of an acrylic-based resin, a polyamide-based resin, a fluorine-based resin, an aromatic-polyether-based resin, and a liquid-crystal-polyester-based resin, and the like.

### 4-6-3. Organic Particle Layer

Separator 30 may include an organic particle layer, for example. Separator 30 may include an organic particle layer instead of the resin film, for example. Separator 30 may include an organic particle layer instead of the inorganic particle layer, for example. Separator 30 may include both the resin film and an organic particle layer. Separator 30 may include both the inorganic particle layer and an organic particle layer. Separator 30 may include the resin film, the inorganic particle layer, and an organic particle layer.

The organic particle layer may have a thickness from 0.1 to 50 $\mu$m, or from 0.5 to 20 $\mu$m, or from 0.5 to 10 $\mu$m, or from 1 to 5 $\mu$m, for example. The organic particle layer includes organic particles. The organic particles may also be called "an organic filler". The organic particles may include a heat-resistant material. The organic particles may include, for example, at least one selected from the group consisting of PE, PP, PTFE, PI, PAI, PA, aramid, and the like. The organic particles may be spherical, rod-like, plate-like, fibrous, and/or the like, for example. The organic particles may have a D50 from 0.1 to 10 $\mu$m, or from 0.5 to 3 $\mu$m, for example.

Separator 30 may include a mixed layer, for example. The mixed layer includes both inorganic particles and organic particles.

### 4-7. Battery Configuration

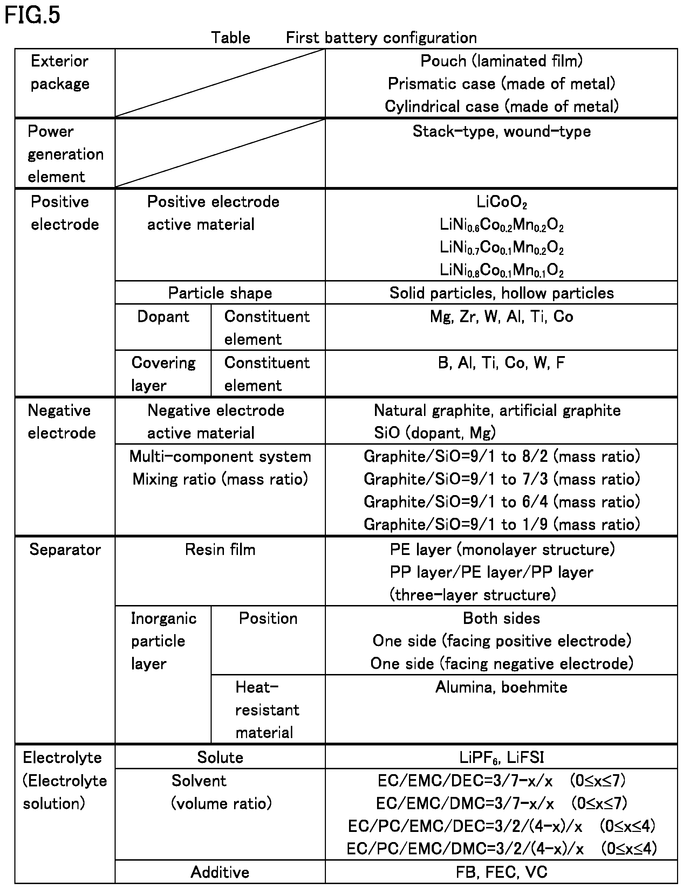

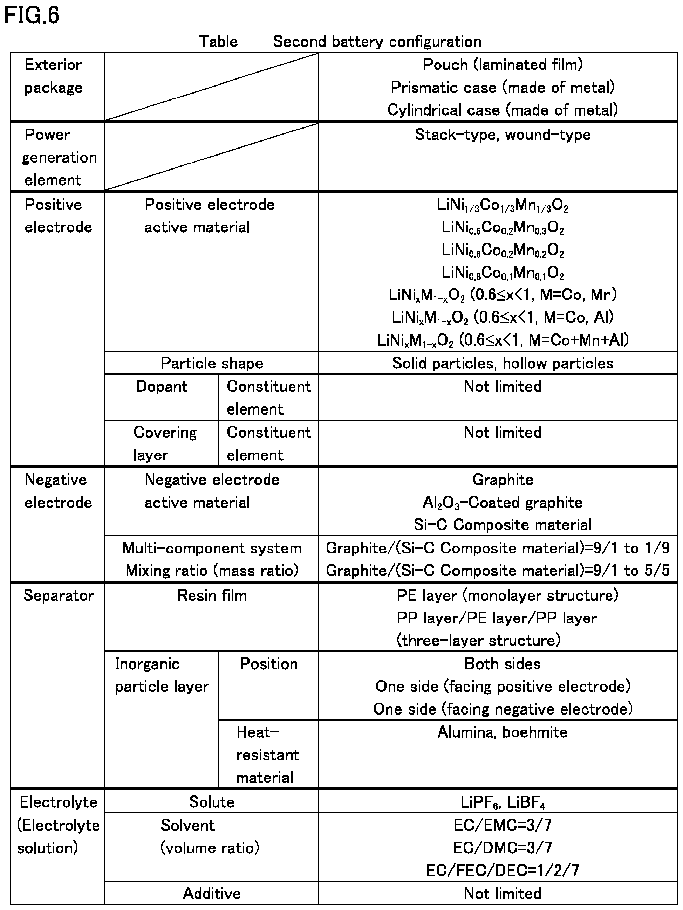

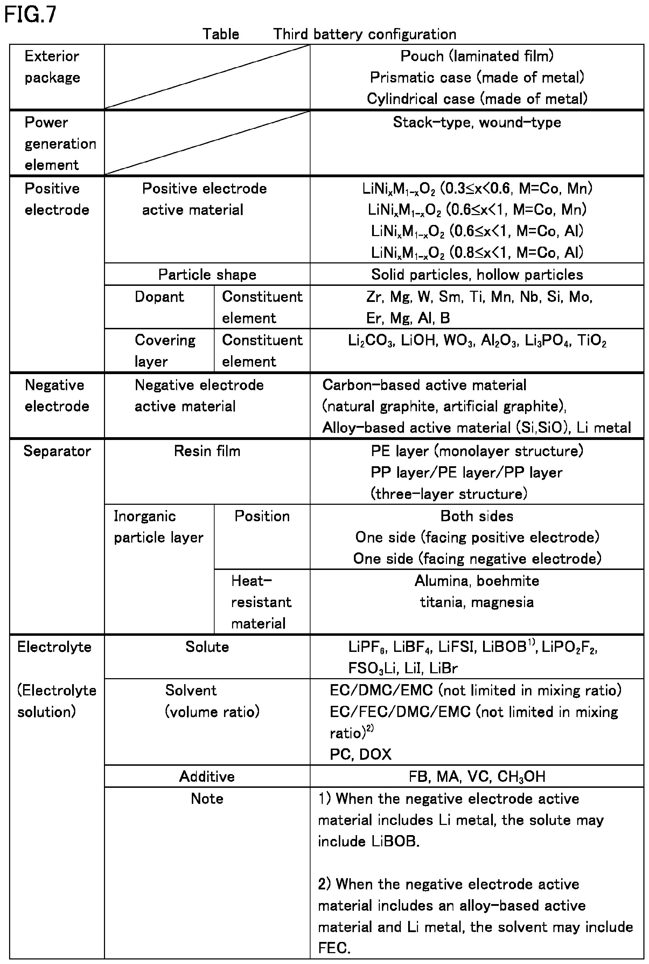

Fig. 5 is a table showing a first battery configuration. Fig. 6 is a table showing a second battery configuration. Fig. 7 is a table showing a third battery configuration. In each table, when a plurality of materials are described in a single cell, this description is intended to mean one of them as well as a combination of them. For example, when materials "$\alpha$, $\beta$, $\gamma$" are described in a single cell, this description is intended to mean "at least one selected from the group consisting of $\alpha$, $\beta$, and $\gamma$". Certain elements may be extracted from the first to third battery configurations and optionally combined together.

The present embodiment may be incorporated into the first to third battery configurations, for example. "Graphite", "natural graphite", and "artificial graphite" in the first to third battery configurations may be replaced by the negative electrode active material according to the present embodiment. Combining the first to third battery configurations with the present embodiment, for example, may improve battery performance.

[Examples]

### 5. Experiments

### 5-1. Sample Production

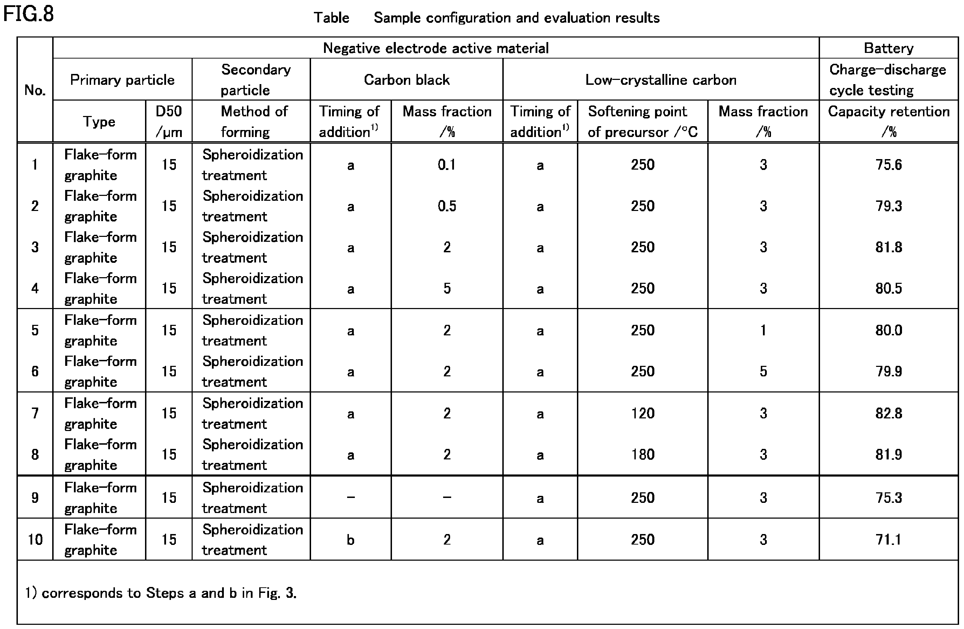

Fig. 8 is a table showing sample configuration and evaluation results. In the manner described below, negative electrode active materials according to Nos. 1 to 10 as well as batteries were produced. Hereinafter, the negative electrode active material according to No. 1 may be simply referred to as "No. 1", for example.

No. 1

(a) Forming Secondary Particle

The below materials were prepared.

Primary particles: flake-form graphite (D50, around 15 $\mu$m)
Carbon black: acetylene black
Precursor: coal tar pitch (softening point, 250°C)

The materials specified above were placed in an MP mixer (trade name, manufactured by Nippon Coke & Engineering; the same applies hereinafter). In the MP mixer, at a number of revolutions of 5000 rpm, for 1 hour, spheroidization treatment was carried out to form a secondary particle.

(b) Heat Treatment

The resulting secondary particle was subjected to heat treatment in an argon atmosphere, and thereby the precursor was converted into low-crystalline carbon. The treatment temperature was 1000°C, and the treatment duration was 1 hour. Thus, a negative electrode active material was produced. The resulting negative electrode active material contained 0.1% carbon black and 3% low-crystalline carbon in mass fraction, with the remainder being made up of graphite.

In the case of No. 1, carbon black and the precursor were added in "(a) forming a secondary particle". As for "Timing of addition" in Fig. 8, "a" indicates that the specified substance (carbon black, precursor) was added in the step of forming a secondary particle (see Fig. 3).

Nos. 2 to 4

A negative electrode active material was produced in the same manner as in the case of No. 1 except that the amount of carbon black was changed so as to achieve the carbon black mass fraction in the negative electrode active material specified in Fig. 8.

Nos. 5, 6

A negative electrode active material was produced in the same manner as in the case of No. 1 except that the amount of the precursor was changed so as to achieve the low-crystalline carbon mass fraction in the negative electrode active material specified in Fig. 8.

Nos. 7, 8

A negative electrode active material was produced in the same manner as in the case of No. 1 except that a precursor having the softening point specified in Fig. 8 was used.

No. 9

A negative electrode active material was produced in the same manner as in the case of No. 1 except that carbon black was not used.

No. 10

(a) Forming Secondary Particle

Primary particles (flake-form graphite) and a precursor (coal tar pitch) were placed in an MP mixer. In the MP mixer, at a number of revolutions of 5000 rpm, for 1 hour, spheroidization treatment was carried out to form a secondary particle.

(b) Heat Treatment

The resulting secondary particle and carbon black were mixed to form a mixture. The resulting mixture was subjected to heat treatment in an argon atmosphere, and thereby the precursor was converted into low-crystalline carbon. The treatment temperature was 1000°C, and the treatment duration was 1 hour. Thus, a negative electrode active material was produced. The resulting negative electrode active material contained 2% carbon black and 3% low-crystalline carbon in mass fraction, with the remainder being made up of graphite. It is conceivable that carbon black was adhered to the outer surface of the secondary particle.

In the case of No. 10, carbon black was add in "(b) heat treatment". As for "Timing of addition" in Fig. 8, "b" indicates that the specified substance (carbon black) was added in the step of heat treatment (see Fig. 3).

5-2. Evaluation

Batteries for evaluation purposes (evaluation batteries) that included the negative electrode active materials according to Nos. 1 to 10 were produced. Charge-discharge cycle testing was carried out to evaluate capacity degradation.

5-2-1. Battery Configuration

The configuration of the evaluation batteries were as described below.

Positive Electrode

Composition of positive electrode active material layer: NCM/AB/PVdF=92/5/3 (mass ratio)
Positive electrode current collector: Al foil (thickness, 15 $\mu$m)

Negative Electrode

Composition of negative electrode active material layer: (negative electrode active material)/CMC/SBR=98/1/1 (mass ratio)
Negative electrode current collector: Cu foil (thickness, 10 $\mu$m)

Separator

Resin film: three-layer structure (PP layer/PE layer/PP layer), with a thickness of 24 $\mu$m
Inorganic particle layer (HRL): one side (the side facing the positive electrode), with a thickness of 4 $\mu$m

Electrolyte (Electrolyte Solution)

Solvent: EC/DMC/EMC=3/3/4 (volume ratio)
Solute: $LiPF_6$ (1 mol/L)
Additive: LiBOB (0.5 mol/L)

5-2-2. Assembly Procedure

A positive electrode paste is applied to the surface of the positive electrode current collector to form a positive electrode active material layer. The resulting positive electrode active material layer is pressed, and thereby a positive electrode is produced.
A negative electrode paste is applied to the surface of the negative electrode current collector to form a negative electrode active material layer. The resulting negative electrode active material layer is pressed, and thereby a negative electrode is produced.
The positive electrode, the separator, and the negative electrode are stacked in this order to form a stack. The resulting stack is spirally wound to form a power generation element (an electrode group).
As an exterior package, a prismatic case is prepared. Within the exterior package, the power generation element is placed. The power generation element is electrically connected to a terminal.
Into the exterior package, the electrolyte solution is injected. After the electrolyte solution is injected, the exterior package is hermetically sealed.
After impregnation with the electrolyte solution, the battery is charged to a predetermined capacity. After charging, in an environment at 60°C, the battery is stored for a predetermined period of time.

5-2-3. Charge-Discharge Cycle Testing

Under the conditions described below, charge-discharge cycle testing was carried out.

Ambient temperature: 60°C
SOC range: 0 to 100%
Current hour rate: 2 C (at this hour rate, the rated capacity is discharged in 0.5 hours)

Number of cycles: 300

Before and after the charge-discharge cycle testing, discharged capacity was measured. The discharged capacity before the charge-discharge cycle testing is the initial capacity. The discharged capacity after the charge-discharge cycle testing is the post-cycle capacity. The post-cycle capacity was divided by the initial capacity to determine capacity retention. The capacity retention is expressed in percentage. The higher the capacity retention is, the more reduced the capacity degradation is considered to be.

5-4. Results

Nos. 1 to 8 exhibited higher capacity retention than No. 9 (see Fig. 8). No. 9 does not include carbon black.
Nos. 1 to 8 exhibited higher capacity retention than No. 10 (see Fig. 8). It is conceivable that carbon black is not present inside the secondary particle in No. 10.
When the mass fraction of carbon black is from 2 to 5%, capacity retention tends to be high (see Nos. 1 to 4 in Fig. 8).
When the mass fraction of low-crystalline carbon is from 1 to 3%, capacity retention tends to be high (see Nos. 3, 5, 6 in Fig. 8).
When the softening point of the precursor is not more than 180°C, capacity retention tends to be high (see Nos. 3, 7, 8 in Fig. 8).

**Claims**

1. A negative electrode active material comprising:

    graphite;
    low-crystalline carbon (3); and
    carbon black (4), wherein
    the graphite forms a secondary particle (2),
    the secondary particle (2) includes a plurality of primary particles (1), and
    inside the secondary particle (2),

        the low-crystalline carbon (3) is adhered to surfaces of the primary particles (1), and
        the carbon black (4) is surrounded by the primary particles (1).

2. The negative electrode active material according to claim 1, wherein

    in a cross-sectional image of the secondary particle (2),

        the secondary particle (2) consists of a central region (2c) and a surface layer region (2s),
        the surface layer region (2s) surrounds the central region (2c), the surface layer region (2s) extends $0.25D_{max}$ from a surface of the secondary particle (2) in a depth direction of the secondary particle (2),
        the $0.25D_{max}$ refers to 0.25 times a maximum diameter, and
        the maximum diameter refers to a distance between two points located farthest apart from each other on an outline of the secondary particle (2), and

    in the central region (2c),

        the low-crystalline carbon (3) is adhered to the surfaces of the primary particles (1), and
        the carbon black (4) is surrounded by the primary particles (1).

3. The negative electrode active material according to claim 2, wherein

    a closed pore is formed in at least one of the central region (2c) and the surface layer region (2s), and
    the carbon black (4) is present in the closed pore.

4. The negative electrode active material according to claim 1, wherein

a closed pore is formed inside the secondary particle (2), and
the carbon black (4) is present in the closed pore.

5. The negative electrode active material according to any one of claims 1 to 4, comprising the carbon black (4) in a mass fraction from 0.1 to 5%.

6. The negative electrode active material according to any one of claims 1 to 4, comprising the low-crystalline carbon (3) in a mass fraction from 1 to 5%.

7. A non-aqueous electrolyte secondary battery comprising the negative electrode active material (5) according to claim 1.

8. A method of producing a negative electrode active material, comprising:

(a) forming a secondary particle (2) by mixing primary particles (1), a precursor, and carbon black (4), the primary particles (1) including graphite; and
(b) performing heat treatment on the secondary particle (2) to change the precursor into low-crystalline carbon (3).

9. The method of producing a negative electrode active material according to claim 8, wherein the (a) includes spheroidizing the secondary particle (2).

10. The method of producing a negative electrode active material according to claim 8 or 9, wherein the primary particles (1) are in flake form.

11. The method of producing a negative electrode active material according to claim 8 or 9, wherein the precursor includes coal tar pitch.

12. The method of producing a negative electrode active material according to claim 8 or 9, wherein the precursor has a softening point of 180°C or less.

FIG.1

FIG.2

FIG.3

FIG.4  _100_

# FIG.5

Table First battery configuration

| | | |
|---|---|---|
| Exterior package | | Pouch (laminated film)<br>Prismatic case (made of metal)<br>Cylindrical case (made of metal) |
| Power generation element | | Stack-type, wound-type |
| Positive electrode | Positive electrode active material | $LiCoO_2$<br>$LiNi_{0.6}Co_{0.2}Mn_{0.2}O_2$<br>$LiNi_{0.7}Co_{0.1}Mn_{0.2}O_2$<br>$LiNi_{0.8}Co_{0.1}Mn_{0.1}O_2$ |
| | Particle shape | Solid particles, hollow particles |
| | Dopant — Constituent element | Mg, Zr, W, Al, Ti, Co |
| | Covering layer — Constituent element | B, Al, Ti, Co, W, F |
| Negative electrode | Negative electrode active material | Natural graphite, artificial graphite<br>SiO (dopant, Mg) |
| | Multi-component system Mixing ratio (mass ratio) | Graphite/SiO=9/1 to 8/2 (mass ratio)<br>Graphite/SiO=9/1 to 7/3 (mass ratio)<br>Graphite/SiO=9/1 to 6/4 (mass ratio)<br>Graphite/SiO=9/1 to 1/9 (mass ratio) |
| Separator | Resin film | PE layer (monolayer structure)<br>PP layer/PE layer/PP layer<br>(three-layer structure) |
| | Inorganic particle layer — Position | Both sides<br>One side (facing positive electrode)<br>One side (facing negative electrode) |
| | Inorganic particle layer — Heat-resistant material | Alumina, boehmite |
| Electrolyte (Electrolyte solution) | Solute | $LiPF_6$, LiFSI |
| | Solvent (volume ratio) | EC/EMC/DEC=3/7-x/x ($0{\leq}x{\leq}7$)<br>EC/EMC/DMC=3/7-x/x ($0{\leq}x{\leq}7$)<br>EC/PC/EMC/DEC=3/2/(4-x)/x ($0{\leq}x{\leq}4$)<br>EC/PC/EMC/DMC=3/2/(4-x)/x ($0{\leq}x{\leq}4$) |
| | Additive | FB, FEC, VC |

# FIG.6

Table    Second battery configuration

| Exterior package | | | Pouch (laminated film) Prismatic case (made of metal) Cylindrical case (made of metal) |
|---|---|---|---|
| Power generation element | | | Stack-type, wound-type |
| Positive electrode | Positive electrode active material | | $LiNi_{1/3}Co_{1/3}Mn_{1/3}O_2$ $LiNi_{0.5}Co_{0.2}Mn_{0.3}O_2$ $LiNi_{0.6}Co_{0.2}Mn_{0.2}O_2$ $LiNi_{0.8}Co_{0.1}Mn_{0.1}O_2$ $LiNi_xM_{1-x}O_2$ ($0.6 \leq x < 1$, M=Co, Mn) $LiNi_xM_{1-x}O_2$ ($0.6 \leq x < 1$, M=Co, Al) $LiNi_xM_{1-x}O_2$ ($0.6 \leq x < 1$, M=Co+Mn+Al) |
| | Particle shape | | Solid particles, hollow particles |
| | Dopant | Constituent element | Not limited |
| | Covering layer | Constituent element | Not limited |
| Negative electrode | Negative electrode active material | | Graphite $Al_2O_3$-Coated graphite Si-C Composite material |
| | Multi-component system Mixing ratio (mass ratio) | | Graphite/(Si-C Composite material)=9/1 to 1/9 Graphite/(Si-C Composite material)=9/1 to 5/5 |
| Separator | Resin film | | PE layer (monolayer structure) PP layer/PE layer/PP layer (three-layer structure) |
| | Inorganic particle layer | Position | Both sides One side (facing positive electrode) One side (facing negative electrode) |
| | | Heat-resistant material | Alumina, boehmite |
| Electrolyte (Electrolyte solution) | Solute | | $LiPF_6$, $LiBF_4$ |
| | Solvent (volume ratio) | | EC/EMC=3/7 EC/DMC=3/7 EC/FEC/DEC=1/2/7 |
| | Additive | | Not limited |

# FIG.7

Table    Third battery configuration

| | | | |
|---|---|---|---|
| Exterior package | | | Pouch (laminated film)<br>Prismatic case (made of metal)<br>Cylindrical case (made of metal) |
| Power generation element | | | Stack-type, wound-type |
| Positive electrode | Positive electrode active material | | $LiNi_xM_{1-x}O_2$ (0.3≤x<0.6, M=Co, Mn)<br>$LiNi_xM_{1-x}O_2$ (0.6≤x<1, M=Co, Mn)<br>$LiNi_xM_{1-x}O_2$ (0.6≤x<1, M=Co, Al)<br>$LiNi_xM_{1-x}O_2$ (0.8≤x<1, M=Co, Al) |
| | Particle shape | | Solid particles, hollow particles |
| | Dopant | Constituent element | Zr, Mg, W, Sm, Ti, Mn, Nb, Si, Mo, Er, Mg, Al, B |
| | Covering layer | Constituent element | $Li_2CO_3$, LiOH, $WO_3$, $Al_2O_3$, $Li_3PO_4$, $TiO_2$ |
| Negative electrode | Negative electrode active material | | Carbon-based active material (natural graphite, artificial graphite), Alloy-based active material (Si,SiO), Li metal |
| Separator | Resin film | | PE layer (monolayer structure)<br>PP layer/PE layer/PP layer (three-layer structure) |
| | Inorganic particle layer | Position | Both sides<br>One side (facing positive electrode)<br>One side (facing negative electrode) |
| | | Heat-resistant material | Alumina, boehmite titania, magnesia |
| Electrolyte<br><br>(Electrolyte solution) | Solute | | $LiPF_6$, $LiBF_4$, LiFSI, LiBOB[1], $LiPO_2F_2$, $FSO_3Li$, LiI, LiBr |
| | Solvent (volume ratio) | | EC/DMC/EMC (not limited in mixing ratio)<br>EC/FEC/DMC/EMC (not limited in mixing ratio)[2]<br>PC, DOX |
| | Additive | | FB, MA, VC, $CH_3OH$ |
| | Note | | 1) When the negative electrode active material includes Li metal, the solute may include LiBOB.<br><br>2) When the negative electrode active material includes an alloy-based active material and Li metal, the solvent may include FEC. |

# FIG.8

Table    Sample configuration and evaluation results

| No. | Negative electrode active material | | | | | | | | Battery |
| --- | --- | --- | --- | --- | --- | --- | --- | --- | --- |
| | Primary particle | | Secondary particle | Carbon black | | Low-crystalline carbon | | | Charge-discharge cycle testing |
| | Type | D50 /μm | Method of forming | Timing of addition[1] | Mass fraction /% | Timing of addition[1] | Softening point of precursor /°C | Mass fraction /% | Capacity retention /% |
| 1 | Flake-form graphite | 15 | Spheroidization treatment | a | 0.1 | a | 250 | 3 | 75.6 |
| 2 | Flake-form graphite | 15 | Spheroidization treatment | a | 0.5 | a | 250 | 3 | 79.3 |
| 3 | Flake-form graphite | 15 | Spheroidization treatment | a | 2 | a | 250 | 3 | 81.8 |
| 4 | Flake-form graphite | 15 | Spheroidization treatment | a | 5 | a | 250 | 3 | 80.5 |
| 5 | Flake-form graphite | 15 | Spheroidization treatment | a | 2 | a | 250 | 1 | 80.0 |
| 6 | Flake-form graphite | 15 | Spheroidization treatment | a | 2 | a | 250 | 5 | 79.9 |
| 7 | Flake-form graphite | 15 | Spheroidization treatment | a | 2 | a | 120 | 3 | 82.8 |
| 8 | Flake-form graphite | 15 | Spheroidization treatment | a | 2 | a | 180 | 3 | 81.9 |
| 9 | Flake-form graphite | 15 | Spheroidization treatment | – | – | a | 250 | 3 | 75.3 |
| 10 | Flake-form graphite | 15 | Spheroidization treatment | b | 2 | a | 250 | 3 | 71.1 |

1) corresponds to Steps a and b in Fig. 3.

Europäisches
Patentamt

European
Patent Office

Office européen
des brevets

# EUROPEAN SEARCH REPORT

**Application Number**

EP 23 21 1314

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/285684 A1 (MIYAUCHI TAKAYUKI [JP] ET AL) 8 September 2022 (2022-09-08) <br> * claim 1 * <br> * paragraph [0008] * <br> * paragraph [0043] - paragraph [0047] * <br> * paragraphs [0059], [0078], [0080], [0103] * | 1-12 | INV. <br> C01B32/20 <br> H01M4/133 <br> H01M4/583 |
| X | EP 4 007 015 A1 (SHOWA DENKO MATERIALS CO LTD [JP]) 1 June 2022 (2022-06-01) <br> * claim 1 * <br> * paragraph [0006] * <br> * paragraph [0044] - paragraph [0045] * <br> * paragraph [0047] - paragraph [0048] * <br> * paragraph [0077] * | 1-12 | |
| X | EP 4 007 016 A1 (SHOWA DENKO MATERIALS CO LTD [JP]) 1 June 2022 (2022-06-01) <br> * claim 1 * <br> * paragraph [0006] * <br> * paragraph [0044] - paragraph [0045] * <br> * paragraphs [0047], [0077] * | 1-12 | TECHNICAL FIELDS SEARCHED (IPC) <br><br> C01B <br> H01M |
| X | US 2021/028441 A1 (TSUCHIYA HIDEYUKI [JP] ET AL) 28 January 2021 (2021-01-28) <br> * claims 1, 8, 11 * <br> * paragraphs [0077], [0092], [0123] * | 1-7 | |

The present search report has been drawn up for all claims

| Place of search | Date of completion of the search | Examiner |
|---|---|---|
| The Hague | 30 May 2024 | Tarallo, Anthony |

**ANNEX TO THE EUROPEAN SEARCH REPORT
ON EUROPEAN PATENT APPLICATION NO.**

EP 23 21 1314

30-05-2024

| Patent document cited in search report | | Publication date | Patent family member(s) | | Publication date |
|---|---|---|---|---|---|
| US 2022285684 | A1 | 08-09-2022 | CN | 114207879 A | 18-03-2022 |
| | | | EP | 4007017 A1 | 01-06-2022 |
| | | | ES | 2948200 T3 | 01-09-2023 |
| | | | HU | E062001 T2 | 28-09-2023 |
| | | | JP | 7371689 B2 | 31-10-2023 |
| | | | JP | WO2021019727 A1 | 04-02-2021 |
| | | | KR | 20220041102 A | 31-03-2022 |
| | | | PL | 4007017 T3 | 07-08-2023 |
| | | | TW | 202114279 A | 01-04-2021 |
| | | | US | 2022285684 A1 | 08-09-2022 |
| | | | WO | 2021019727 A1 | 04-02-2021 |
| EP 4007015 | A1 | 01-06-2022 | CN | 114207880 A | 18-03-2022 |
| | | | EP | 4007015 A1 | 01-06-2022 |
| | | | ES | 2969376 T3 | 17-05-2024 |
| | | | JP | 7226559 B2 | 21-02-2023 |
| | | | JP | WO2021019728 A1 | 04-02-2021 |
| | | | PL | 4007015 T3 | 02-04-2024 |
| | | | WO | 2021019728 A1 | 04-02-2021 |
| EP 4007016 | A1 | 01-06-2022 | CN | 114175311 A | 11-03-2022 |
| | | | EP | 4007016 A1 | 01-06-2022 |
| | | | ES | 2967106 T3 | 26-04-2024 |
| | | | JP | 7226558 B2 | 21-02-2023 |
| | | | JP | WO2021019726 A1 | 04-02-2021 |
| | | | PL | 4007016 T3 | 25-03-2024 |
| | | | WO | 2021019726 A1 | 04-02-2021 |
| US 2021028441 | A1 | 28-01-2021 | JP | 7272350 B2 | 12-05-2023 |
| | | | JP | WO2019186830 A1 | 18-03-2021 |
| | | | TW | 201943130 A | 01-11-2019 |
| | | | US | 2021028441 A1 | 28-01-2021 |
| | | | WO | 2019186830 A1 | 03-10-2019 |

EPO FORM P0459

For more details about this annex : see Official Journal of the European Patent Office, No. 12/82

**EP 4 397 620 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022206304 A
- JP 2020043069 A